# EUROPEAN PATENT APPLICATION

(11) **EP 4 383 523 A1**
(43) Date of publication of application: **12.06.2024**
(21) Application number: 22871657.7
(22) Date of filing: 10.08.2022
(51) Int. Cl.: H02K 3/12, H02K 3/28

(54) **MOTOR AND VEHICLE**

(30) Priority: 23.09.2021 CN 202111116169
(71) Applicant: Huawei Digital Power Technologies Co., Ltd., Shenzhen, Guangdong 518043 (CN)
(72) Inventor: LAN, Hua, Shenzhen, Guangdong 518043 (CN); LUO, Xian, Shenzhen, Guangdong 518043 (CN); LIN, Mengxuan, Shenzhen, Guangdong 518043 (CN)
(74) Representative: Gill Jennings & Every LLP
(86) International application number: PCT/CN2022/111314
(87) International publication number: WO 2023/045599

(57) **Abstract**

Embodiments of this application provide a motor and a vehicle. The motor includes a stator iron core and a flat wire winding structure. The flat wire winding structure is wound on the stator iron core through stator slots. Each stator slot has n layers of the flat wire winding structure. Each phase of the flat wire winding structure includes a first part and a second part, the first part occupies a layers in the stator slot, and the second part occupies b layers in the stator slot, and a≠b. In addition, in each pole of each phase of the flat wire winding structure, a stator slot wound with the first part and a stator slot wound with the second part are staggered by y1 slots. To be specific, the first part and the second part of each phase of the flat wire winding structure are staggered relative to each other by the y1 slots, an equivalent pitch between phase belts of a same phase of the winding located in two adjacent poles is y=y0-y1, and the pitch y is less than a pole pitch y0. In this way, the flat wire winding structure is a short-pitch winding, and further, when the motor runs, good torque fluctuation suppression effect is achieved, back electromotive force harmonics of the motor are reduced, and performance of the motor is improved.

## Description

This application claims priority to Chinese Patent Application No. 202111116169.X, filed with the China National Intellectual Property Administration on September 23, 2021 and entitled "MOTOR AND VEHICLE", which is incorporated herein by reference in its entirety.

### TECHNICAL FIELD

This application relates to the field of motor technologies, and in particular, to a motor and a vehicle.

### BACKGROUND

In recent years, flat wire motors are increasingly used in the field of new energy vehicles. The flat wire motor has advantages in aspects such as a high copper slot fill factor, facilitating heat dissipation of a motor winding, and capabilities of improving a voltage endurance capability of the winding and reducing an end length of the winding, to improve torque density and power density of the motor. Therefore, the flat wire motor has a good application prospect in new energy electric vehicles.

Currently, a winding manner of a stator winding of an existing flat wire motor is mostly a full-pitch winding. Specifically, for example, the motor includes a stator iron core, stator slots are provided in a circumference of the stator iron core, and the winding is wound on the stator iron core through the stator slots. A part of the winding is wound in the stator slots, and a part of the winding is located outside the stator slots. In a full-pitch flat wire winding structure, an equivalent pitch between phase belts of a same phase of the winding located in two adjacent poles is equal to a pole pitch.

However, the foregoing full-pitch winding structure causes a large torque fluctuation of the flat wire motor, and the motor has high back electromotive force harmonics during running, reducing performance of the motor.

### SUMMARY

This application provides a motor and a vehicle, to resolve a problem that motor performance is reduced because a torque fluctuation of a motor is large and back electromotive force harmonics are high because an existing motor winding is a full-pitch winding.

A first aspect of this application further provides a motor, including a stator iron core and a flat wire winding structure, where a plurality of stator slots are provided in a circumference of the stator iron core;
the flat wire winding structure is wound on the stator iron core through the stator slots, a part of the flat wire winding structure is located in the stator slots, a part of the flat wire winding structure is located outside the stator slots, and each of the stator slots has n layers of the flat wire winding structure;
each phase of the flat wire winding structure includes a first part and a second part, where a quantity of layers of the first part in the stator slot is a, a quantity of layers of the second part in the stator slot is b, a+b=n, a≠b, and n is greater than 2; and
in each pole of each phase of the flat wire winding structure, a stator slot wound with the first part and a stator slot wound with the second part are staggered by y1 slots, so that a pitch of the flat wire winding is y=y0-y1, where y0 is a pole pitch of the flat wire winding.

Each phase of the flat wire winding structure is divided into the first part and the second part. The quantity of layers of the first part in the stator slot is a, the quantity of layers of the second part in the stator slot is b, and the stator slot wound with the first part and the stator slot wound with the second part are staggered by y1 slots. To be specific, on a basis that the first part and the second part are both located in a same stator slot, the stator slot wound with the first part is shifted by y1 slots relative to the stator slot wound with the second part, or the stator slot wound with the second part is shifted by y1 slots relative to the stator slot wound with the first part, so that the stator slot wound with the first part and the stator slot wound with the second part are staggered.

That is, the first part and the second part of each phase of the flat wire winding structure are staggered relative to each other by y1 slots, and an equivalent pitch between phase belts of a same phase of winding located in two adjacent poles is y=y0-y1, that is, the pitch y of the U-phase winding structure is less than y0. y0 is the pole pitch of the flat wire winding, so that the pitch of the flat wire winding structure is less than the pole pitch. In this way, the flat wire winding structure is a short-pitch winding. Therefore, when the motor runs, a good torque fluctuation suppression effect is achieved, back electromotive force harmonics of the motor are reduced, and performance of the motor is improved.

In a possible implementation, n is an even number, or n is an odd number. In other words, when the quantity n of layers in the stator slot is an odd number, a short-pitch effect can also be implemented in the foregoing staggered manner. A structural design is simple, a process requirement is low, and implementation is convenient. To be specific, when the quantity n of layers of the flat wire winding structure in the stator slot is an odd number or an even number, an effect of the short-pitch winding can be achieved, and an application scope of the winding structure is expanded.

In a possible implementation, when n is an even number, a is an even number, and b is an even number. In this way, a plurality of winding coils may be disposed on the stator slots in a same arrangement direction, so that angles of the torsion heads of the flat wire winding structure at the welding end are consistent, to avoid problems such as torsion head and welding complexity caused by inconsistent angles of the torsion heads of the welding end, thereby further effectively simplifying the design of the flat wire winding structure, and facilitating implementation.

In a possible implementation, n/2 is an odd number. Because a≠b, when n/2 is an odd number, n can be divided into a and b that are both even numbers, so that the winding coils can be disposed in a same arrangement manner, and the angles of the torsion heads of the welding end are consistent. This effectively simplifies the design of the flat wire winding structure, and facilitates implementation.

In a possible implementation, the quantity of layers of the first part in the stator slot is a=n/2+1, and the quantity of layers of the second part in the stator slot is b=n/2-1; or
the quantity of layers of the first part in the stator slot is a=n/2-1, and the quantity of layers of the second part in the stator slot is b=n/2+1.

In a possible implementation, n includes at least: 6 and 10.

In a possible implementation, n/2 is an even number.

In a possible implementation, the quantity of layers of the first part in the stator slot is a=n/2-2, and the quantity of layers of the second part in the stator slot is b=n/2+2; or
the quantity of layers of the first part in the stator slot is a=n/2+2, and the quantity of layers of the second part in the stator slot is b=n/2-2.

In a possible implementation, the first part includes a first conductor layer located in the stator slot, and first conductor layers in every two adjacent layers are connected to form a first coil layer; and
the second part includes a second conductor layer located in the stator slot, and second conductor layers in every two adjacent layers are connected to form a second coil layer.

In a possible implementation, each phase of the flat wire winding structure includes at least two first coil layers, and the first coil layers are connected to each other through a single hairpin wire. That is, a cross-layer connection is implemented through a single hairpin wire. This helps simplify the flat wire winding structure and facilitates implementation.

In a possible implementation, each phase of the flat wire winding structure includes at least two second coil layers, and the second coil layers are connected to each other through a single hairpin wire. This further helps simplify the flat wire winding structure and facilitate implementation.

In a possible implementation, the first conductor layer is connected to the second conductor layer through a single hairpin wire. In other words, a hairpin wire connection between different parts of a same phase belt is implemented through the single hairpin wire. This helps further simplify the flat wire winding structure and facilitates implementation.

In a possible implementation, each phase of the flat wire winding structure includes a welding end, and on a side of the welding end, a span of the first coil layer, a span of the second coil layer, and a span of the single hairpin wire between the first coil layer and the second coil layer are equal. In this way, on the side of the welding end, the angles of the torsion heads can be further maintained consistent, so that the torsion head and welding processes can be further simplified, and the design of the flat wire winding structure can be further simplified.

In a possible implementation, when n is an odd number, the quantity of layers of the first part in the stator slot is a=(n+1)/2, and the quantity of layers of the second part in the stator slot is b=(n-1)/2; or
the quantity of layers of the first part in the stator slot is a=(n-1)/2, and the quantity of layers of the second part in the stator slot is b=(n+1)/2.

In a possible implementation, n includes at least: 7 and 9.

In a possible implementation, a range of a quantity y1 of slots of staggering includes: 0<y1<y0.

In a possible implementation, a quantity of the stator slots of the flat wire winding is Q=mpq, where p is a quantity of poles of the flat wire winding structure, m is a quantity of phases of the flat wire winding structure, and q is a quantity of slots of each pole of each phase.

In a possible implementation, the flat wire winding structure includes a plurality of phases, and in a same stator slot, an insulator is disposed between two adjacent layers of the flat wire winding structure that belongs to different phases.

A second aspect of this application provides a vehicle, including at least wheels, a transmission component, and any one of the foregoing motors, where the motor is connected to the wheels by using the transmission component.

### BRIEF DESCRIPTION OF DRAWINGS

FIG. 1 is a schematic diagram of a structure of a motor according to an embodiment of this application;
FIG. 2 is a schematic diagram of expanded distribution of a branch 1 of a U-phase winding structure in an 8-pole 48-slot 10-layer flat wire winding structure according to an embodiment of this application;
FIG. 3 is a schematic diagram of expanded distribution of a branch 2 of a U-phase winding structure in an 8-pole 48-slot 10-layer flat wire winding structure according to an embodiment of this application;
FIG. 4 is a partial enlarged view of a part A in FIG. 3;
FIG. 5 is a partial enlarged view of a part B in FIG. 3;
FIG. 6 is a schematic diagram of expanded distribution of a branch 3 of a U-phase winding structure in an 8-pole 48-slot 10-layer flat wire winding structure according to an embodiment of this application;
FIG. 7 is a schematic diagram of expanded distribution of a branch 4 of a U-phase winding structure in an 8-pole 48-slot 10-layer flat wire winding structure according to an embodiment of this application;
FIG. 8 is a schematic diagram of expanded distribution of a U-phase winding structure in an 8-pole 48-slot 10-layer flat wire winding structure according to an embodiment of this application;
FIG. 9 is a schematic diagram of expanded distribution of an 8-pole 48-slot 10-layer flat wire winding structure according to an embodiment of this application;
FIG. 10 is a comparison diagram of torque fluctuations at a peak torque working condition point of an 8-pole 48-slot motor according to an embodiment of this application;
FIG. 11 is a schematic diagram of expanded distribution of a branch 2 of a U-phase winding structure in a 6-pole 54-slot 6-layer flat wire winding structure according to an embodiment of this application;
FIG. 12 is a schematic diagram of expanded distribution of a U-phase winding structure in a 6-pole 54-slot 6-layer flat wire winding structure according to an embodiment of this application;
FIG. 13 is a schematic diagram of expanded distribution of a 6-pole 54-slot 6-layer flat wire winding structure according to an embodiment of this application;
FIG. 14 is a schematic diagram of expanded distribution of a branch 1 of a U-phase winding structure in an 8-pole 48-slot 9-layer flat wire winding structure according to an embodiment of this application;
FIG. 15 is a schematic diagram of expanded distribution of a U-phase winding structure in an 8-pole 48-slot 9-layer flat wire winding structure according to an embodiment of this application; and
FIG. 16 is a schematic diagram of expanded distribution of an 8-pole 48-slot 9-layer flat wire winding structure according to an embodiment of this application.

Descriptions of reference numerals:
100-motor; 10-stator iron core; 11-stator slot;
20-flat wire winding structure; 21-U-phase winding structure; 21c-wire-in end;
21d-wire-out end; 211-first part; 211a-first conductor layer;
212-second part; 212a-second conductor layer; 2110, 2111 -first coil layer;
2120, 2121, 2122-second coil layer; 22-W-phase winding structure; 23-V-phase winding structure.

### DESCRIPTION OF EMBODIMENTS

Terms used in implementations of this application are merely used to explain specific embodiments of this application, and are not intended to limit this application.

A motor usually includes a stator iron core and a stator winding disposed on the stator iron core. Specifically, a plurality of stator slots are usually provided in the stator iron core, the plurality of stator slots are provided at intervals along a circumference of the stator iron core, and an extension direction of the stator slots may be parallel to an axial direction of the stator iron core. The stator slots may be used for limiting and fixing, and the stator winding may be wound on the stator iron core through the stator slots.

Some terms in the motor are explained and described:
A quantity (p) of poles of a motor is a quantity of magnetic poles of the motor. The magnetic poles are divided into N poles and S poles. Generally, one N pole and one S pole are referred to as a pair of magnetic poles, in other words, a quantity (P) of pole pairs is 1. Therefore, if the quantity of pole pairs of the motor is 1, 2, 3, or 4, the quantity (P) of poles of the motor is 2, 4, 6, or 8. A rotational speed (n) of the motor and the quantity (P) of pole pairs of the motor satisfy n=60f/p, where f is a frequency of a power supply. That is, when the frequency of f changes, the rotational speed of the motor is related to the frequency and the quantity of pole pairs.

A pole pitch (y0) is a range occupied by each magnetic pole along an inner circle of a stator iron core of the motor, namely, a span occupied by opposite slots in adjacent N and S poles. The pole pitch may be represented by a quantity of slots occupied by each pole: y0=Z/2P, where Z is a total quantity of stator slots on the stator iron core, and P is the quantity of pole pairs.

For a pitch (y), because there may be a plurality of U-shaped line spans that form a winding for a flat wire motor, an equivalent pitch is usually used to describe comprehensive effect of the U-shaped line spans, that is, the equivalent pitch is used as a pitch of the winding, where the equivalent pitch is a spacing between a phase belt of a first part and a phase belt of a second part in a same phase of winding in two adjacent poles.

In addition, a winding manner of the stator winding includes a full-pitch winding and a short-pitch winding, where the full-pitch winding is a stator winding whose pitch is equal to a pole pitch, and the short-pitch winding is a stator winding whose pitch is less than a pole pitch.

Currently, most common motors are flat wire motors and round wire motors. The flat wire motor means that a stator winding is formed by winding wide flat copper wires, and the round wire motor means that a stator winding is formed by winding narrow round copper wires. Because a winding manner of the stator winding in the round wire motor has a high degree of freedom, it is common that the stator winding is a short-pitch winding in the round wire motor.

However, in a flat wire motor, a winding coil is usually formed first, for example, an opening is formed at one end, and the other end is a U-shaped end. This is similar to a shape of a hair clip. The opening end is a structure formed by an opening between two wire legs. Then, the two wire legs of the winding coil are penetrated into corresponding stator slots, and finally, wire legs at the opening ends of two adjacent winding coils are welded to form a winding coil group, and one or more winding coil groups are parallel to form a winding structure. Therefore, a winding forming requirement, a processing difficulty, and a winding difficulty of the flat wire motor are high. In the flat wire motor, a winding manner of a stator winding is usually a full-pitch winding, and a short-pitch winding is difficult to implement, and a process requirement is high. When the motor runs, electromotive forces are generated when magnetic induction lines are cut. A direction of the electromotive forces is opposite to that of a voltage applied to two ends of the motor. In this case, the generated electromotive forces are back electromotive forces. Coil electromotive forces are an algebraic sum of electromotive forces on two coil sides. A span between two coil sides of a full-pitch winding is equal to an electrical angle of 180°, and a span between two coil sides of a short-pitch winding is less than an electrical angle of 180°. Therefore, the back electromotive forces of the full-pitch winding are high, and generated back electromotive force harmonics are high, affecting performance of the motor.

Based on this, an embodiment of this application provides a motor. A flat wire winding structure wound on a stator iron core of the motor is a short-pitch winding, so that back electromotive force harmonics generated during running of the motor are reduced, and performance of the motor is improved. In addition, a structural design of the flat wire winding structure is simple, a process requirement is low, and implementation is convenient.

With reference to the accompanying drawings, the following describes in detail a motor provided in embodiments of this application.

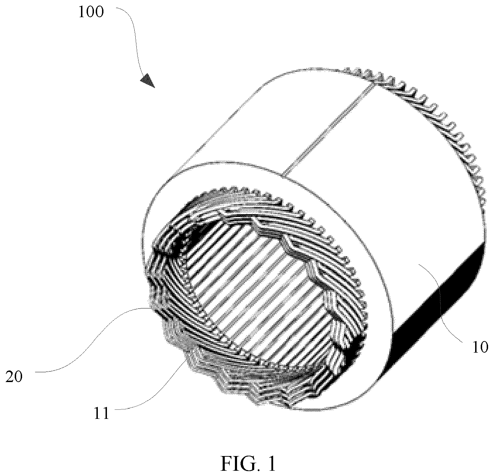

FIG. 1 is a schematic diagram of a structure of a motor according to an embodiment of this application.

With reference to FIG. 1, a motor 100 may include a stator iron core 10 and a flat wire winding structure 20, and a plurality of stator slots 11 are provided at intervals in a circumference of an inner wall of the stator iron core 10. The stator slots 11 may be used for limiting and fixing, and the flat wire winding structure 20 is wound on the stator iron core 10 through the stator slots 11.

The flat wire winding structure 20 is a winding structure formed by winding a winding coil group on the stator slots 11. A part of the flat wire winding structure 20 may be located in the stator slots 11, and a part of the flat wire winding structure 20 may be located outside the stator slots 11. The flat wire winding structure 20 may include an effective edge 20a, and an end edge 20b and an end edge 20c that are located at two ends of the effective edge 20a. The effective edge 20a is located in the stator slot 11, and has a function of cutting a magnetic field and inducing an electromotive force. The end edge 20b and the end edge 20c are respectively located on two sides of the effective edge 20a and located outside the stator slot 11.

A phase quantity x of the flat wire winding structure 20 may be 1, that is, a quantity of winding coil groups is 1. In other words, the flat wire winding structure 20 is a single-phase winding. Alternatively, x may be greater than 1, that is, there are a plurality of winding coil groups. For example, the flat wire winding structure 20 may be a three-phase winding, that is, there are three winding coil groups, for example, a U-phase winding structure, a V-phase winding structure, and a W-phase winding structure are included. For example, the flat wire winding structure 20 may alternatively be a six-phase winding, that is, a quantity of winding coil groups is 6, for example, a U-phase winding structure, a V-phase winding structure, a W-phase winding structure, an A-phase winding structure, a B-phase winding structure, and a C-phase winding structure are included. Alternatively, the phase quantity may be another quantity.

In addition, each phase of the flat wire winding structure 20 may include at least one branch winding. That is, each phase of the winding structure may include one branch winding. Alternatively, each phase of the winding structure may include two or more branch windings. When each phase of the winding structure includes two or more branch windings, the two or more branch windings in each phase of the winding structure are connected in parallel.

In this embodiment of this application, an example in which the flat wire winding structure 20 is a three-phase winding is used. Specifically, a U-phase winding structure, a V-phase winding structure, and a W-phase winding structure are included for description.

In this embodiment of this application, a quantity of layers of each phase of the flat wire winding structure 20 in the stator slot 11 is n. To be specific, n layers of winding coils are arranged in each stator slot 11, and the n layers of winding coils are arranged along an extension direction of the stator slot 11. For example, the first layer of winding coil may be a slot bottom layer of the stator slot 11, that is, the first layer is close to the slot bottom of the stator slot 11, and the n^{th} layer of winding coil is a slot opening layer of the stator slot 11, that is, the n^{th} layer is close to the slot opening of the stator slot 11. Alternatively, opposite arrangement may be performed. For example, the n^{th} layer is the slot bottom layer of the stator slot 11, and the first layer is the slot opening layer of the stator slot 11.

Each phase of the flat wire winding structure 20 may include a first part 211 and a second part 212. For example, each phase of the winding structure may be divided into two parts: the first part 211 and the second part 212. A U-phase winding structure 21 is used as an example and includes the first part 211 and the second part 212. A quantity of layers of the first part 211 wound in the stator slot 11 is a, and a quantity of layers of the second part 212 wound in the stator slot 11 is b.

Both a and b are positive integers greater than 0, n is a positive integer greater than 2, a+b=n, a≠b, and n>2. In other words, for example, if 10 layers of the flat wire winding structure 20 may be wound in one stator slot, the quantity of layers of the first part 211 that is of the U-phase winding structure 21 and that is wound in parallel in each stator slot may be 4, for example, layers 1 to 4, and the quantity of layers of the second part 212 that is of the U-phase winding structure 21 and that is wound in parallel in each stator slot may be 6, for example, layers 5 to 10.

In addition, in each pole of each phase of the flat wire winding structure 20, a stator slot wound with the first part 211 and a stator slot wound with the second part 212 are staggered by y1 slots. To be specific, on a basis that the first part 211 and the second part 212 are both located in a same stator slot, the stator slot wound with the first part 211 is shifted by y1 slots relative to the stator slot wound with the second part 212, or the stator slot wound with the second part 212 is shifted by y1 slots relative to the stator slot wound with the first part 211, so that the stator slot wound with the first part 211 and the stator slot wound with the second part 212 are staggered.

Because the stator slot wound with the first part 211 and the second stator slot wound with the second part 212 are staggered by y1 slots, that is, the first part 211 and the second part 212 of each phase of the winding structure are staggered relative to each other by y1 slots, an equivalent pitch between phase belts of a same phase of winding located in two adjacent poles is y=y0-y1, that is, the pitch y of the U-phase winding structure 21 is less than y0. y0 is the pole pitch of the flat wire winding, so that the pitch of the flat wire winding structure 20 is less than the pole pitch. In this way, the flat wire winding structure 20 is a short-pitch winding. Therefore, when the motor 100 runs, a good torque fluctuation suppression effect is achieved, back electromotive force harmonics of the motor 100 are reduced, and performance of the motor 100 is improved.

When the flat wire winding structure 20 is wound, one phase may be first wound, and then the remaining phases are sequentially wound. When each phase of the winding structure is wound, for example, when the U-phase winding structure is wound, the first part 211 may be first wound and then the second part 212 is wound, or the second part 212 may be first wound and then the first part 211 is wound, or the first part 211 and the second part 212 may be wound alternately.

In this embodiment of this application, a range of the quantity y1 of slots by which the stator slot wound with the first part 211 and the stator slot wound with the second part 212 are staggered may be 0<y1<y0, so that the equivalent pitch of the flat wire winding structure 20 is less than the pole pitch, and the flat wire winding structure 20 is a short-pitch winding.

In this embodiment of this application, a quantity of the stator slots of the flat wire winding is Q=mpq, where p is a quantity of poles of the flat wire winding structure, m is a quantity of phases of the flat wire winding structure, and q is a quantity of slots of each pole of each phase of the flat wire winding structure; and mpq is a product of m, p, and q. For example, the flat wire winding structure is a three-phase winding, that is, m is 3, the quantity p of poles of the flat wire winding structure is 8, and the quantity q of slots of each pole of each phase is 2. In this case, the quantity Q of the stator slots on the stator iron core 10 is 48.

It should be noted that the quantity of poles and the quantity of phases of the motor 100, the quantity of layers of the flat wire winding structure 20 wound in each stator slot 11, the quantity of slots of each pole of each phase, and the like may be selected and set based on an actual requirement of the motor 100.
a may be an even number, and b may also be an even number. Because one winding coil is correspondingly wound on two stator slots 11, that is, occupies two layers, when at least one of a and b is an odd number, when wire leg end parts of adjacent winding coils are welded, directions of torsion heads of a welding end are inconsistent, and problems such as torsion head and welding complexity exist, making a design of the winding structure more complex and more difficult to implement.

When both a and b are even numbers, a plurality of winding coils may be disposed on the stator slots 11 in a same arrangement direction, so that angles of the torsion heads of the flat wire winding structure 20 at the welding end are consistent, to avoid problems such as torsion head and welding complexity caused by inconsistent angles of the torsion heads of the welding end, thereby further effectively simplifying the design of the flat wire winding structure 20, and facilitating implementation.

The quantity n of layers of the flat wire winding structure 20 in the stator slot 11 may be an even number. In a conventional technology, to implement a short pitch of the winding structure, the quantity of layers in the stator slot is equally divided and stator slots are staggered with each other, so that each phase of the winding structure is divided into two parts, and the two parts are respectively located in the stator slots that are staggered with each other after equal division. When n is an even number, and n/2 is an odd number, the stator slots after equal division both have odd-numbered layers. For example, n=10, and the two parts obtained after equal division each have five layers in the stator slot, and one winding coil correspondingly occupies two layers. In this way, directions of torsion heads of the welding end are inconsistent, resulting in a problem that the winding structure design is complex and difficult to implement.

However, in this embodiment of this application, a≠b, and when n/2 is an odd number, n can be divided into a and b that are both even numbers, so that the winding coils can be disposed in a same arrangement manner, and the angles of the torsion heads of the welding end are consistent. This effectively simplifies the design of the flat wire winding structure 20, and facilitates implementation.

Specifically, when n/2 is an odd number, the quantity a of layers of the first part 211 in the stator slot 11 may be n/2+1, and the quantity b of layers of the second part 212 in the stator slot 11 may be n/2-1. Alternatively, the quantity a of layers of the first part 211 in the stator slot 11 may be n/2-1, and the quantity b of layers of the second part 212 in the stator slot 11 may be n/2+1. In this way, the quantity of layers of the first part 211 in the stator slot 11 is close to the quantity of layers of the second part 212 in the stator slot 11, and the flat wire winding structure 20 can be easily wound when an effect of the short-pitch winding is implemented, thereby facilitating implementation.

Specifically, for example, n may be 6, the quantity a of layers of the first part 211 of the flat wire winding structure 20 in the stator slot 11 may be 2, and the quantity b of layers of the second part 212 in the stator slot 11 may be 4, or the quantity a of layers of the first part 211 in the stator slot 11 may be 4, and the quantity b of layers of the second part 212 in the stator slot 11 may be 2.

For example, n may be 10, the quantity a of layers of the first part 211 of the flat wire winding structure 20 in the stator slot 11 may be 4, and the quantity b of layers of the second part 212 in the stator slot 11 may be 6, or the quantity a of layers of the first part 211 in the stator slot 11 may be 6, and the quantity b of layers of the second part 212 in the stator slot 11 may be 4.

To be specific, when the quantity of layers of the flat wire winding structure 20 wound in the stator slot 11 is large, for example, 6 and 10, a short-pitch effect can also be achieved. This helps improve performance of the motor 100.

Correspondingly, n/2 may alternatively be an even number. When n/2 is an even number, the quantity a of layers of the first part 211 in the stator slot 11 may be n/2+2, and the quantity b of layers of the second part 212 in the stator slot 11 may be n/2-2. Alternatively, the quantity a of layers of the first part 211 in the stator slot 11 may be n/2-2, and the quantity b of layers of the second part 212 in the stator slot 11 may be n/2+2. This can also enable the quantity of layers of the first part 211 in the stator slot 11 to be close to the quantity of layers of the second part 212 in the stator slot 11, and the flat wire winding structure 20 can be easily wound when an effect of the short-pitch winding is implemented, thereby facilitating implementation.

For example, n may be 8, the quantity a of layers of the first part 211 of the flat wire winding structure 20 in the stator slot 11 may be 6, and the quantity b of layers of the second part 212 in the stator slot 11 may be 2, or the quantity a of layers of the first part 211 in the stator slot 11 may be 2, and the quantity b of layers of the second part 212 in the stator slot 11 may be 4.

In this embodiment of this application, each phase of the flat wire winding structure 20 includes the first part and the second part. The first part may include a first conductor layer located in the stator slot, and every two first conductor layers in adjacent layers are connected to form a first coil layer.

Correspondingly, the second part may include a second conductor layer located in the stator slot, and every two second conductor layers in adjacent layers are connected to form a second coil layer.

Each phase of the flat wire winding structure may include at least two first coil layers, and two adjacent first coil layers are connected to each other through a single hairpin wire. Each phase of the flat wire winding structure may also include at least two second coil layers, and two adjacent second coil layers are connected to each other through a single hairpin wire. In other words, a connection between coil layers is implemented through the single hairpin wire, and a cross-layer connection is implemented through the single hairpin wire. This helps simplify the flat wire winding structure and facilitates implementation.

In addition, the first conductor layer may also be connected to the second conductor layer through a single hairpin wire. In other words, a hairpin wire connection between different parts of a same phase belt is implemented through the single hairpin wire. This helps further simplify the flat wire winding structure and facilitates implementation.

On a side of the welding end of each phase of the flat wire winding structure, a span of the first coil layer, a span of the second coil layer, and a span of the single hairpin wire between the first coil layer and the second coil layer may be equal. In this way, on the side of the welding end, the angles of the torsion heads of the winding coils can be further maintained consistent, so that the torsion head and welding processes can be further simplified, and the design of the flat wire winding structure can be further simplified.

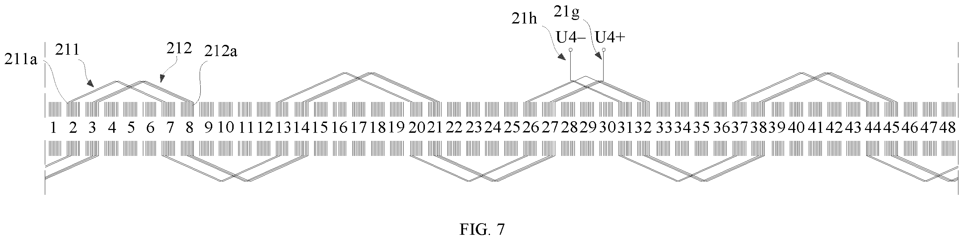

In a possible implementation, an example in which the motor 100 is a three-phase motor, that is, the flat wire winding structure 20 is a three-phase winding, for example, includes a U-phase winding structure 21, a V-phase winding structure 23, and a W-phase winding structure 22 (as shown in FIG. 7), the quantity p of poles of the motor 100 is 8, the quantity N of slots of each pole of each phase is 2, and the quantity of layers of the flat wire winding structure 20 in each stator slot 11 is 10 is used. In this case, the quantity Q of stator slots on the stator iron core 10 is 48. That is, the flat wire winding structure 20 is an 8-pole 48-slot 10-layer winding with 4 pole pairs and a pole pitch of 6.

For example, the 8-pole 48-slot 10-layer flat wire winding structure 20 includes 4 branch windings, which are respectively a branch 1, a branch 2, a branch 3, and a branch 4. The following Table 1 shows phase belt distribution of the branch 1 of the U-phase winding structure in the flat wire winding structure.

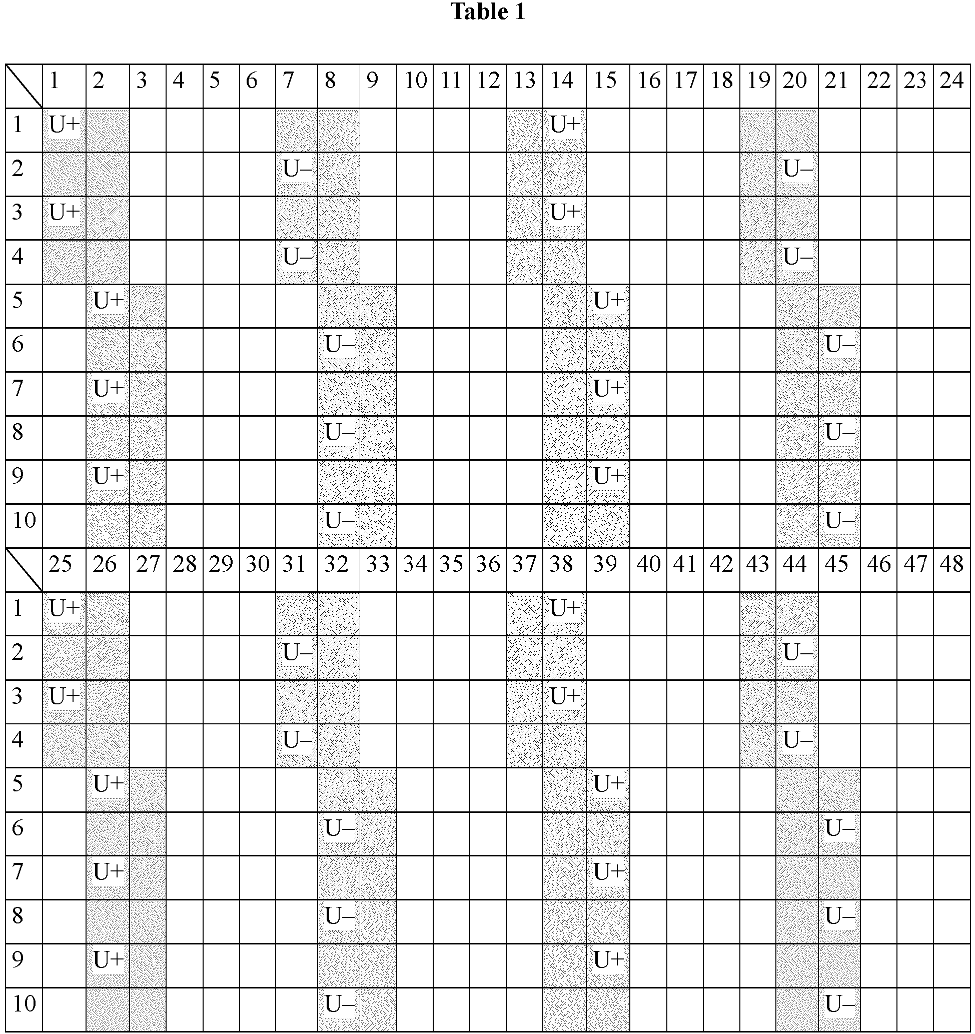

The first row in Table 1 is slot numbers of the stator slots, and the first column is numbers of layers wound in each stator slot. It can be learned with reference to Table 1 that, 10 layers may be wound in each stator slot, and the first layer may be a slot bottom layer of the stator slot, and the tenth layer may be a slot opening layer of the stator slot.

"+" represents that current flows into a conductor (that is, a winding coil), and "-" represents that current flows out of a conductor. As shown in Table 1, in the U-phase winding structure 21, for example, the first part 211 has four layers in the stator slot, and the second part 212 has six layers in the stator slot. The quantity of slots by which the stator slot wound with the first part 211 and the stator slot wound with the second part 212 are staggered is y 1 = 1. For example, the first part 211 is located at layers 1 to 4 in No. 1 stator slot 11, and the second part 212 is located at layers 5 to 10 in No. 2 stator slot 11.

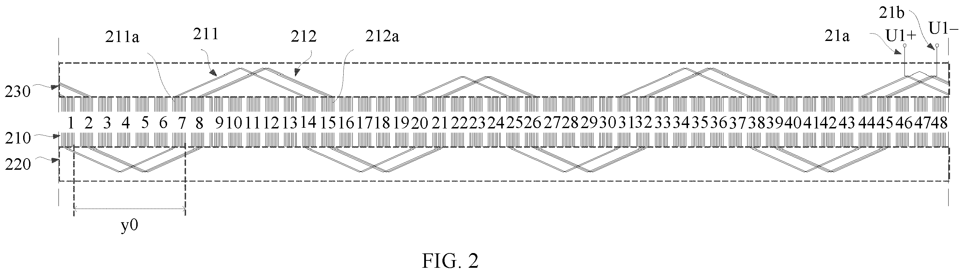

FIG. 2 is a schematic diagram of expanded distribution of a branch 1 of a U-phase winding structure in an 8-pole 48-slot 10-layer flat wire winding structure according to an embodiment of this application.

It should be noted that each phase of the winding structure has a wire-in end and a wire-out end. For example, as shown in FIG. 2, the branch 1 of the U-phase winding structure 21 has a wire-in end 21a (that is, U1+) and a wire-out end 21b (that is, U1-), that is, the branch 1 shown in FIG. 2 is led in from the first layer of the stator slot 11 and led out from the tenth layer of No. 45 stator slot 11.

For example, during winding, a winding coil is inserted into the stator slots 11, and then the winding coils are connected in a welding manner to form one phase of the winding structure. In this case, a middle part of the winding coil may be a U-shaped structure, and two ends may be respectively inserted into two stator slots 11, and then two adjacent winding coils are welded and connected in a welding manner to finally form the U-phase winding structure 21. In this case, the side of the welding end 220 is a side on which the two adjacent winding coils are welded and connected, and a side of the U-shaped end 230 is a side of a U-shaped structure of the winding coil.

The U-phase winding structure 21 may be divided into the first part 211 and the second part 212, that is, some winding coils form the first part 211, and some winding coils form the second part 212. The first part 211 includes a first conductor layer 211a located in the stator slot 11. The second part 212 includes a second conductor layer 212a located in the stator slot 11. The first conductor layer 211a and the second conductor layer 212a may form an effective edge 210 of the U-phase winding structure 21, and the welding end 220 and the U-shaped end 230 are located on two sides of the U-phase winding structure 21 respectively.

It should be noted that, effective edges of the U-phase winding structure 21, the V-phase winding structure 23, and the W-phase winding structure 22 jointly form an effective edge of the flat wire winding structure 20, welding ends 220 of the U-phase winding structure 21, the V-phase winding structure 23, and the W-phase winding structure 22 jointly form an end edge 20c of the flat wire winding structure 20, and U-shaped ends 230 of the U-phase winding structure 21, the V-phase winding structure 23, and the W-phase winding structure 22 jointly form an end edge 20b of the flat wire winding structure 20.

With reference to Table 1 and FIG. 2, the first part 211 of the U-phase winding structure 21 may be first wound, and then the second part 212 of the U-phase winding structure 21 is wound after the first part 211 is wound.

It should be noted that in this embodiment of this application, each branch in each phase of the flat wire winding structure 20 is wound on one of stator slots of each pole. In two adjacent poles, a layer occupied by the flat wire winding structure 20 on one of stator slots of one of the poles is adjacent to a layer occupied by the flat wire winding structure 20 on one of stator slots of the other pole. For example, wiring of the first part 211 is wound from the first layer of No. 1 stator slot to the second layer of No. 7 stator slot. In addition, in a plurality of poles of each phase of the flat wire winding structure 20, layers occupied by the flat wire winding structure 20 in every two poles are the same as layers occupied by the flat wire winding structure 20 in two adjacent poles. For example, wiring of the first part 211 is wound from the first layer of No. 1 stator slot to the second layer of No. 7 stator slot, wound to the first layer of No. 14 stator slot, and then wound to the second layer of No. 20 stator slot. Layers occupied by the flat wire winding structure in No. 1 stator slot and No. 7 stator slot are respectively the same as layers occupied by the flat wire winding structure in No. 14 stator slot and No. 20 stator slot.

Specifically, wiring of the first part 211 of the branch 1 of the U-phase winding structure 21 is sequentially: the first layer of No. 1 stator slot, the second layer of No. 7 stator slot, the first layer of No. 14 stator slot, the second layer of No. 20 stator slot, the first layer of No. 25 stator slot, the second layer of No. 31 stator slot, the first layer of No. 38 stator slot, the second layer of No. 44 stator slot, the third layer of No. 1 stator slot, the fourth layer of No. 7 stator slot, the third layer of No. 14 stator slot, the fourth layer of No. 20 stator slot, the third layer of No. 25 stator slot, the fourth layer of No. 31 stator slot, the third layer of No. 38 stator slot, and the fourth layer of No. 44 stator slot.

Wiring of the second part 212 of the branch 1 is sequentially: the fifth layer of No. 2 stator slot, the sixth layer of No. 8 stator slot, the fifth layer of No. 15 stator slot, the sixth layer of No. 21 stator slot, the fifth layer of No. 26 stator slot, the sixth layer of No. 32 stator slot, the fifth layer of No. 39 stator slot, the sixth layer of No. 45 stator slot, the seventh layer of No. 2 stator slot, the eighth layer of No. 8 stator slot, the seventh layer of No. 15 stator slot, the eighth layer of No. 21 stator slot, the seventh layer of No. 26 stator slot, the eighth layer of No. 32 stator slot, the seventh layer of No. 39 stator slot, the eighth layer of No. 45 stator slot, the ninth layer of No. 2 stator slot, the tenth layer of No. 8 stator slot, the ninth layer of No. 15 stator slot, the tenth layer of No. 21 stator slot, the ninth layer of No. 26 stator slot, the tenth layer of No. 32 stator slot, the ninth layer of No. 39 stator slot, and the tenth layer of No. 45 stator slot.

With reference to Table 1 and FIG. 2, the pole pitch y0 may be a span between No. 1 stator slot and No. 7 stator slot, that is, y0=6. Because the stator slot wound with the first part 211 and the stator slot wound with the second part 212 are staggered by one slot, for example, when the first part 211 is located in No. 1 stator slot, the second part 212 is located in No. 2 stator slot. That is, the second part of the phase of the winding structure is staggered by one slot towards an adjacent pole (for example, when No. 1 to No. 6 stator slots belong to one pole, for example, the first pole, and No. 7 to No. 12 stator slots belong to one pole, for example, the second pole, the second part in the first pole is shifted by one slot towards the second pole in a staggered manner). In the two adjacent poles, as for a spacing between a phase belt of the first part and a phase belt of the second part of the same phase of the winding, for example, the second part of the first pole is located in No. 2 stator slot, and the first part of the second pole is located in No. 7 stator slot, an equivalent pitch y between the phase belts is a spacing between No. 2 stator slot to No. 7 stator slot, that is, a pitch of the winding structure is 5. In other words, the equivalent pitch between phase belts of the U-phase winding structure 21 in two adjacent poles is y=y0-1=5, so that a short-pitch effect is achieved.

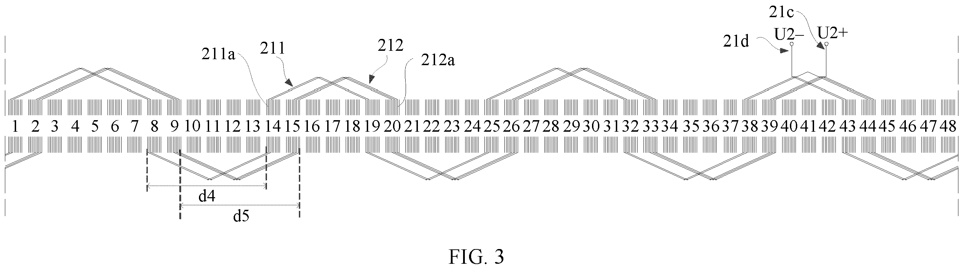

The following table 2 shows phase belt distribution of a branch 2 of a U-phase winding structure in the flat wire winding structure. FIG. 3 is a schematic diagram of expanded distribution of a branch 2 of a U-phase winding structure in an 8-pole 48-slot 10-layer flat wire winding structure according to an embodiment of this application.

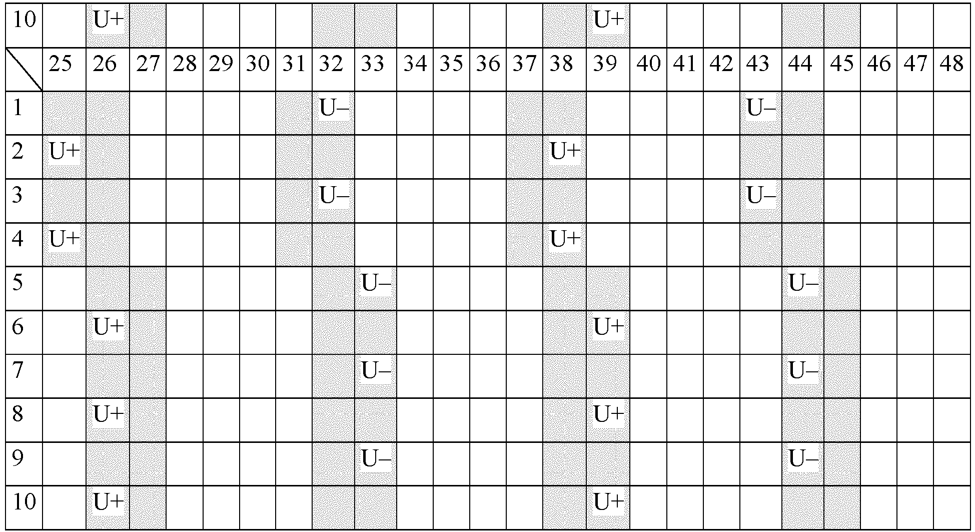

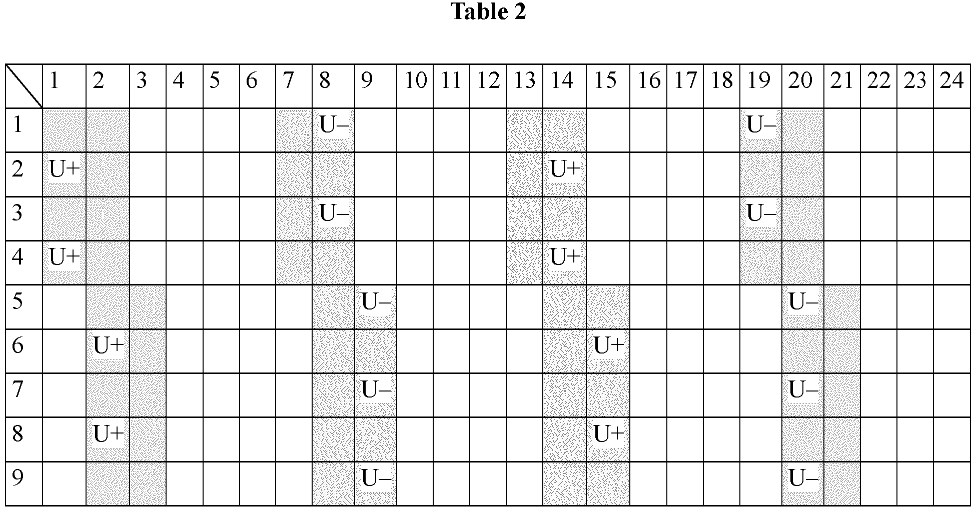

With reference to Table 2 and FIG. 3, a wire-in end 21c of the branch 2 is led in from the tenth layer of No. 39 stator slot, and a wire-out end 21d is led out from the first layer of No. 43 stator slot. That is, the second part 212 of the U-phase winding structure 21 may be first wound, and then the first part 211 of the U-phase winding structure 21 is wound after the second part 212 is wound.

Specifically, wiring of the second part 212 of the U-phase winding structure 21 is sequentially: the tenth layer of No. 39 stator slot, the ninth layer of No. 33 stator slot, the tenth layer of No. 26 stator slot, the ninth layer of No. 20 stator slot, the tenth layer of No. 15 stator slot, the ninth layer of No. 9 stator slot, the tenth layer of No. 2 stator slot, the ninth layer of No. 44 stator slot, the eighth layer of No. 39 stator slot, the seventh layer of No. 33 stator slot, the eighth layer of No. 26 stator slot, the seventh layer of No. 20 stator slot, the eighth layer of No. 15 stator slot, the seventh layer of No. 9 stator slot, the eighth layer of No. 2 stator slot, the seventh layer of No. 44 stator slot, the sixth layer of No. 39 stator slot, the fifth layer of No. 33 stator slot, the sixth layer of No. 26 stator slot, the fifth layer of No. 20 stator slot, the sixth layer of No. 15 stator slot, the fifth layer of No. 9 stator slot, the sixth layer of No. 2 stator slot, and the fifth layer of No. 44 stator slot.

Wiring of the first part 211 of the U-phase winding structure 21 is sequentially: the fourth layer of No. 38 stator slot, the third layer of No. 32 stator slot, the fourth layer of No. 25 stator slot, the third layer of No. 19 stator slot, the fourth layer of No. 14 stator slot, the third layer of No. 8 stator slot, the fourth layer of No. 1 stator slot, the third layer of No. 43 stator slot, the second layer of No. 38 stator slot, the first layer of No. 32 stator slot, the second layer of No. 25 stator slot, the first layer of No. 19 stator slot, the second layer of No. 14 stator slot, the first layer of No. 8 stator slot, the second layer of No. 1 stator slot, and the first layer of No. 43 stator slot.

With reference to Table 2 and FIG. 3, the stator slot 11 wound with the first part 211 and the stator slot 11 wound with the second part 212 are staggered by one slot, so that an equivalent pitch y of the branch 2 is also 5, thereby achieving a short-pitch effect.

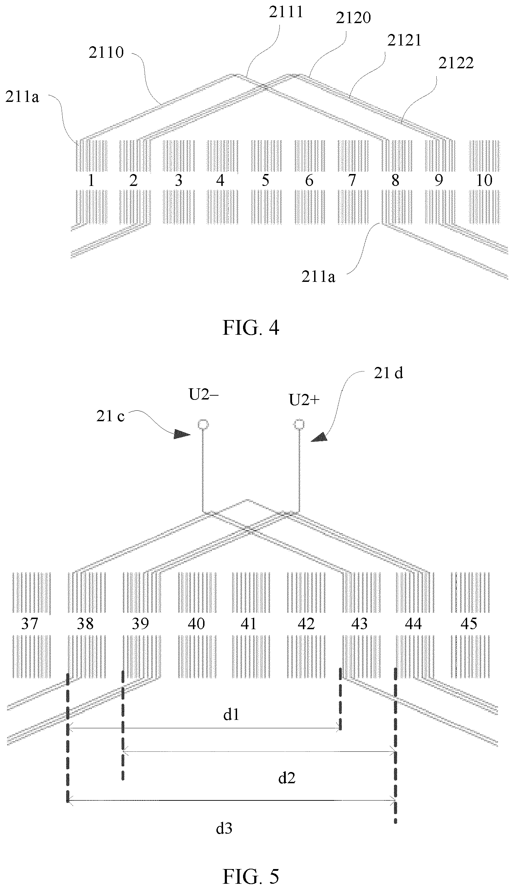

FIG. 4 is a partial enlarged diagram of a part Ain FIG. 3, and FIG. 5 is a partial enlarged diagram of a part B in FIG. 3.

In this embodiment of this application, first conductor layers 211a in every two adjacent layers are connected to form a first coil layer. For example, first conductor layers 211a in the first layer and the second layer are connected to form a first coil layer 2110, and first conductor layers 211a in the third layer and the fourth layer are connected to form a first coil layer 2111.

With reference to FIG. 4 and FIG. 3, a first conductor layer in the second layer of No. 1 stator slot, a first conductor layer in the first layer of No. 8 stator slot, a first conductor layer in the second layer of No. 14 stator slot, a first conductor layer in the first layer of No. 19 stator slot, a first conductor layer in the second layer of No. 25 stator slot, a first conductor layer in the first layer of No. 32 stator slot, and a first conductor layer in the second layer of No. 38 stator slot are sequentially connected to form a first coil layer 2110.

Correspondingly, a first conductor layer in the third layer of No. 43 stator slot, a first conductor layer in the fourth layer of No. 1 stator slot, a first conductor layer in the third layer of No. 8 stator slot, a first conductor layer in the fourth layer of No. 14 stator slot, a first conductor layer in the third layer of No. 19 stator slot, a first conductor layer in the fourth layer of No. 25 stator slot, a first conductor layer in the third layer of No. 32 stator slot, and a first conductor layer in the fourth layer of No. 38 stator slot are sequentially connected to form a first coil layer 2111.

The first coil layers are connected to each other through a single hairpin wire. As shown in FIG. 5, a hairpin wire connecting the two first coil layers is located between the first conductor layer in the second layer of No. 38 stator slot and the first conductor layer 211a in the third layer of No. 43 stator slot, that is, a cross-layer connection is implemented through the single hairpin wire. This helps simplify the flat wire winding structure 20 and facilitates implementation.

A span between the first coil layers is d1=43-38=5.

Correspondingly, with continued reference to FIG. 3 and FIG. 4, second conductor layers 212a in every two adjacent layers are connected to form a second coil layer. For example, second conductor layers in the fifth layer and the sixth layer are connected to form a second coil layer 2122, second conductor layers in the seventh layer and the eighth layer are connected to form a second coil layer 2121, and second conductor layers in the ninth layer and the tenth layer are connected to form a second coil layer 2120.

With reference to FIG. 4 and FIG. 3, a second conductor layer in the sixth layer of No. 2 stator slot, a second conductor layer in the fifth layer of No. 9 stator slot, a second conductor layer in the sixth layer of No. 15 stator slot, a second conductor layer in the fifth layer of No. 20 stator slot, a second conductor layer in the sixth layer of No. 26 stator slot, a second conductor layer in the fifth layer of No. 33 stator slot, and a second conductor layer in the sixth layer of No. 39 stator slot are sequentially connected to form a second coil layer 2122.

Correspondingly, a second conductor layer in the seventh layer of No. 44 stator slot, a second conductor layer in the eighth layer of No. 2 stator slot, a second conductor layer in the seventh layer of No. 9 stator slot, a second conductor layer in the eighth layer of No. 15 stator slot, a second conductor layer in the seventh layer of No. 20 stator slot, a second conductor layer in the eighth layer of No. 26 stator slot, a second conductor layer in the seventh layer of No. 33 stator slot, and a second conductor layer in the eighth layer of No. 39 stator slot are sequentially connected to form a second coil layer 2121.

A second conductor layer in the ninth layer of No. 44 stator slot, a second conductor layer in the tenth layer of No. 2 stator slot, a second conductor layer in the ninth layer of No. 9 stator slot, a second conductor layer in the tenth layer of No. 15 stator slot, a second conductor layer in the ninth layer of No. 20 stator slot, a second conductor layer in the tenth layer of No. 26 stator slot, a second conductor layer in the ninth layer of No. 33 stator slot, and a second conductor layer in the tenth layer of No. 39 stator slot are sequentially connected to form a second coil layer 2120.

The second coil layers are connected to each other through a single hairpin wire. For example, a hairpin wire connecting two second coil layers is located between the second conductor layer in the sixth layer of No. 39 stator slot and the second conductor layer in the seventh layer of No. 44 stator slot and between the second conductor layer in the eighth layer of No. 39 stator slot and the second conductor layer in the ninth layer of No. 44 stator slot, that is, a cross-layer connection is implemented through the single hairpin wire. This helps simplify the flat wire winding structure 20 and facilitates implementation.

A span between the second coil layers is d2=44-39=5. In other words, the span between the first coil layers is equal to the span between the second coil layers.

In addition, the first conductor layer 211a and the second conductor layer 212a may also be connected to each other through a single hairpin wire. With reference to FIG. 5, using the branch 2 as an example, after the second part 212 is wound on the stator slot 11, the stator slot 11 to be wound with the first part 211 needs to be jumped to. For example, the second part 212 in the branch 2 is finally wound to the fifth layer of No. 44 stator slot, and the fourth layer of No. 38 stator slot is jumped to from this layer for winding the first part 211. To be specific, the second conductor layer in the fifth layer of No. 44 stator slot needs to be connected to the first conductor layer in the fourth layer of No. 38 stator slot.

The first conductor layer 211a is connected to the second conductor layer 212a through the single hairpin wire, that is, a hairpin wire connection between the first coil layer and the second coil layer is implemented through the single hairpin wire, that is, a hairpin wire connection between different parts of a same phase belt is implemented through the single hairpin wire. This helps further simplify the flat wire winding structure 20 and facilitates implementation.

The span between the first conductor layer 211a and the second conductor layer 212a may be unequal to the span between the first coil layers and the span between the second coil layers. As shown in the branch 2 in FIG. 5, the span between the first conductor layer 211a and the second conductor layer 212a is d3=44-38=6.

With reference to FIG. 3, in this embodiment of this application, each phase of the flat wire winding structure 20 includes a welding end, the welding end is a side on which two adjacent winding coils are welded and connected, and the span of the first coil layer is d4, that is, the span of the single hairpin wire connecting first conductor layers 211a in two adjacent layers is d4. The span between the second coil layers is d5, the span of the single hairpin wire connecting second conductor layers 212a in two adjacent layers is d5, and the span of the single hairpin wire between the first coil layer and the second coil layer is d3. On the side of the welding end, the span d4 of the first coil layer, the span d5 of the second coil layer, and the span d3 between the first coil layer and the second coil layer are equal. That is, as shown in the branch 2 in FIG. 3, d4=d5=d3=6. In this way, on the side of the welding end, the angles of the torsion heads can be further maintained consistent, so that the torsion head and welding processes can be further simplified, and the design of the flat wire winding structure 20 can be further simplified.

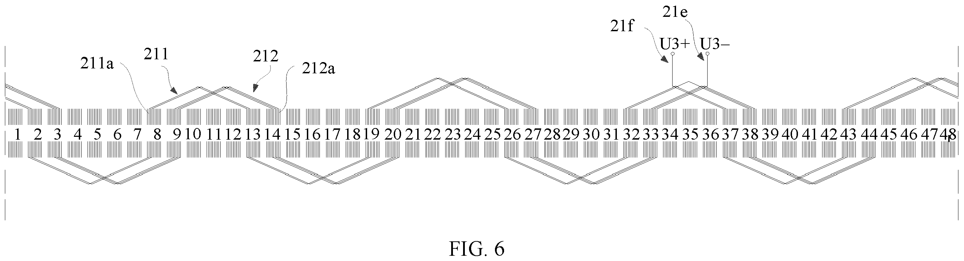

Correspondingly, a branch 3 and a branch 4 are wound on the stator slots 11. The following table 3 shows phase belt distribution of a branch 3 of a U-phase winding structure in the flat wire winding structure. FIG. 6 is a schematic diagram of expanded distribution of a branch 3 of a U-phase winding structure in an 8-pole 48-slot 10-layer flat wire winding structure according to an embodiment of this application.

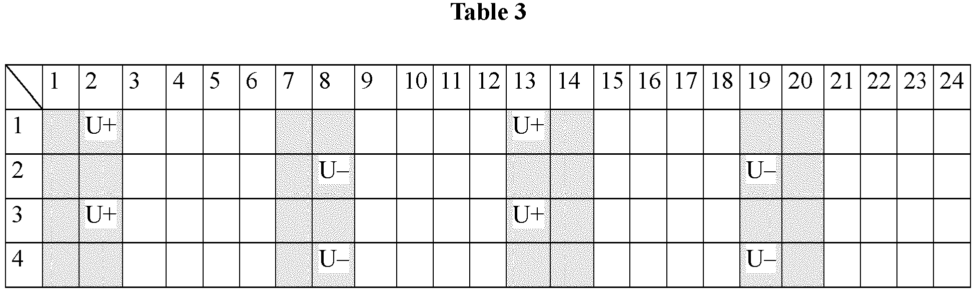

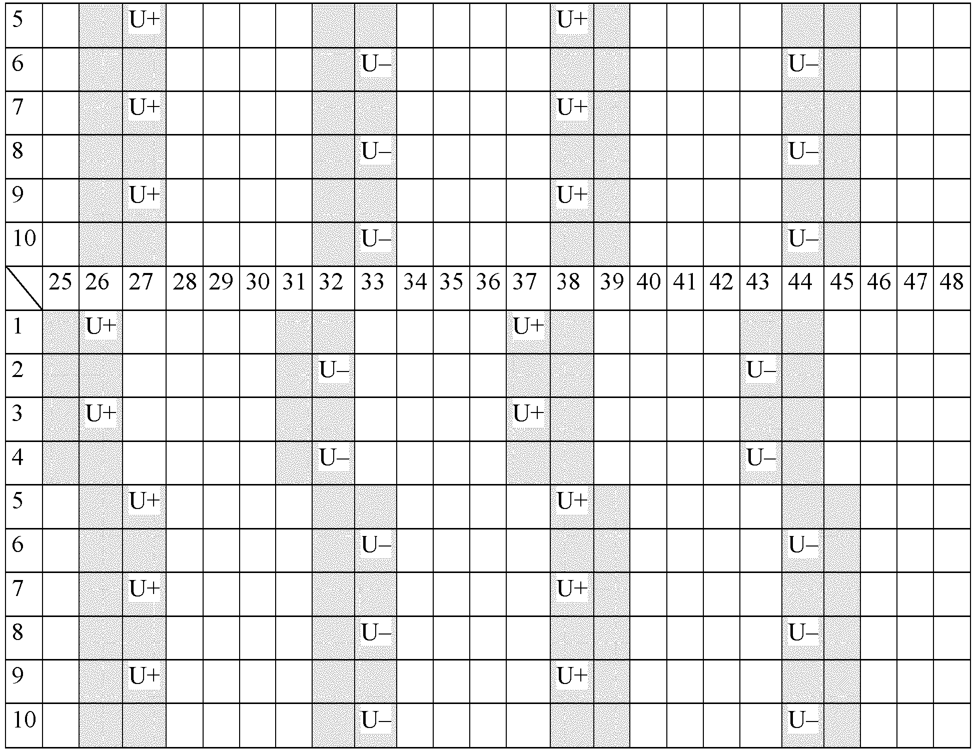

With reference to Table 3 and FIG. 6, a wire-in end 21e of the branch 3 is led in from the first layer of No. 37 stator slot, and a wire-out end 21f is led out from the tenth layer of No. 33 stator slot. That is, the first part 211 of the U-phase winding structure 21 may be first wound, and then the second part 212 of the U-phase winding structure 21 is wound after the first part 211 is wound.

Specifically, wiring of the first part 211 of the U-phase winding structure 21 is sequentially: the first layer of No. 37 stator slot, the second layer of No. 43 stator slot, the first layer of No. 2 stator slot, the second layer of No. 8 stator slot, the first layer of No. 13 stator slot, the second layer of No. 19 stator slot, the first layer of No. 26 stator slot, the second layer of No. 32 stator slot, the third layer of No. 37 stator slot, the fourth layer of No. 43 stator slot, the third layer of No. 2 stator slot, the fourth layer of No. 8 stator slot, the third layer of No. 13 stator slot, the fourth layer of No. 19 stator slot, the third layer of No. 26 stator slot, and the fourth layer of No. 32 stator slot.

Wiring of the second part 212 of the U-phase winding structure 21 is sequentially: the fifth layer of No. 38 stator slot, the sixth layer of No. 44 stator slot, the fifth layer of No. 3 stator slot, the sixth layer of No. 9 stator slot, the fifth layer of No. 14 stator slot, the sixth layer of No. 20 stator slot, the fifth layer of No. 27 stator slot, the sixth layer of No. 33 stator slot, the seventh layer of No. 38 stator slot, the eighth layer of No. 44 stator slot, the seventh layer of No. 3 stator slot, the eighth layer of No. 9 stator slot, the seventh layer of No. 14 stator slot, the eighth layer of No. 20 stator slot, the seventh layer of No. 27 stator slot, the eighth layer of No. 33 stator slot, the ninth layer of No. 38 stator slot, the tenth layer of No. 44 stator slot, the ninth layer of No. 3 stator slot, the tenth layer of No. 9 stator slot, the ninth layer of No. 14 stator slot, the tenth layer of No. 20 stator slot, the ninth layer of No. 27 stator slot, and the tenth layer of No. 33 stator slot.

With reference to Table 3 and FIG. 6, the stator slot 11 wound with the first part 211 and the stator slot 11 wound with the second part 212 are staggered by one slot, so that an equivalent pitch y of the branch 3 is also 5, thereby achieving a short-pitch effect.

The following table 4 shows phase belt distribution of a branch 4 of a U-phase winding structure in the flat wire winding structure. FIG. 7 is a schematic diagram of expanded distribution of a branch 4 of a U-phase winding structure in an 8-pole 48-slot 10-layer flat wire winding structure according to an embodiment of this application.

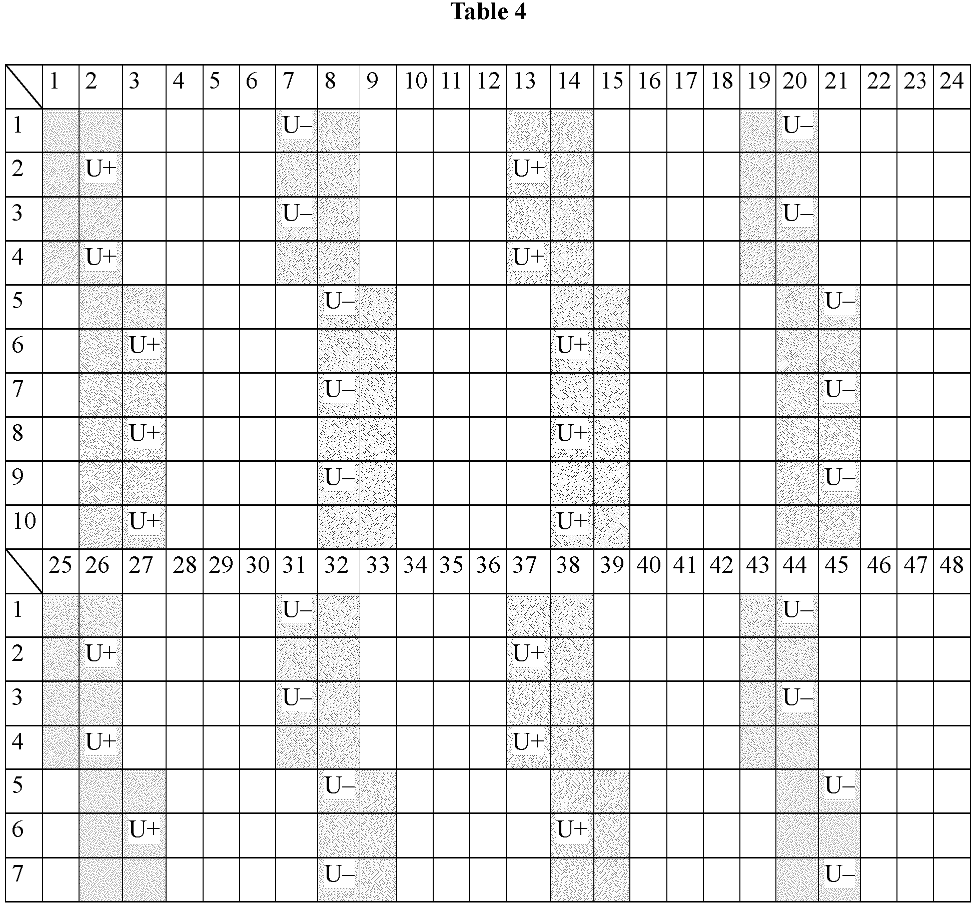

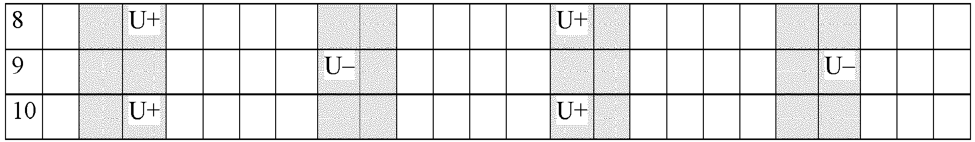

With reference to Table 4 and FIG. 7, a wire-in end 21g of the branch 4 is led in from the tenth layer of No. 27 stator slot, and a wire-out end 21d is led out from the first layer of No. 31 stator slot. That is, the second part 212 of the U-phase winding structure 21 may be first wound, and then the first part 211 of the U-phase winding structure 21 is wound after the second part 212 is wound.

Specifically, wiring of the second part 212 of the U-phase winding structure 21 is sequentially: the tenth layer of No. 27 stator slot, the ninth layer of No. 21 stator slot, the tenth layer of No. 14 stator slot, the ninth layer of No. 8 stator slot, the tenth layer of No. 3 stator slot, the ninth layer of No. 45 stator slot, the tenth layer of No. 38 stator slot, the ninth layer of No. 32 stator slot, the eighth layer of No. 27 stator slot, the seventh layer of No. 21 stator slot, the eighth layer of No. 14 stator slot, the seventh layer of No. 8 stator slot, the eighth layer of No. 3 stator slot, the seventh layer of No. 45 stator slot, the eighth layer of No. 38 stator slot, the seventh layer of No. 32 stator slot, the sixth layer of No. 27 stator slot, the fifth layer of No. 21 stator slot, the sixth layer of No. 14 stator slot, the fifth layer of No. 8 stator slot, the sixth layer of No. 3 stator slot, the fifth layer of No. 45 stator slot, the sixth layer of No. 38 stator slot, and the fifth layer of No. 32 stator slot.

Wiring of the first part 211 of the U-phase winding structure 21 is sequentially: the fourth layer of No. 26 stator slot, the third layer of No. 20 stator slot, the fourth layer of No. 13 stator slot, the third layer of No. 7 stator slot, the fourth layer of No. 2 stator slot, the third layer of No. 44 stator slot, the fourth layer of No. 37 stator slot, the third layer of No. 31 stator slot, the second layer of No. 26 stator slot, the first layer of No. 20 stator slot, the second layer of No. 13 stator slot, the first layer of No. 7 stator slot, the second layer of No. 2 stator slot, the first layer of No. 44 stator slot, the second layer of No. 34 stator slot, and the first layer of No. 37 stator slot.

With reference to Table 4 and FIG. 7, the stator slot 11 wound with the first part 211 and the stator slot 11 wound with the second part 212 are staggered by one slot, so that an equivalent pitch y of the branch 4 is also 5, thereby achieving a short-pitch effect.

With reference to Table 1 to Table 4, using the U-phase winding structure 21 as an example, back electromotive forces located at corresponding layers of the stator slots 11 in each pole are equivalently consistent. For example, back electromotive forces of winding coils located in the first layer in No. 1 stator slot, the first layer in No. 7 stator slot, and the first layer in No. 14 stator slot are the same, and when the winding coils are located in a same stator slot or occupy different layers of stator slots with same back electromotive forces, the back electromotive forces are different. With reference to Table 1 to Table 4, all possible occupations in each branch are traversed. For example, in the branch 1, the first part 211 occupies the first layer and the third layer in No. 1 stator slot, and occupies the second layer and the fourth layer in No. 7 stator slot. The second part 212 occupies the fifth layer, the seventh layer, and the ninth layer in No. 2 stator slot, and occupies the sixth layer, the eighth layer, and the tenth layer in No. 8 stator slot. In this way, phase belt and layer occupations that can be arranged are traversed, so that phases of the back electromotive forces in the four branches are consistent, and the parallel branches can maintain electric potential balance, and no cross current is generated, to help improve performance of the motor 100.

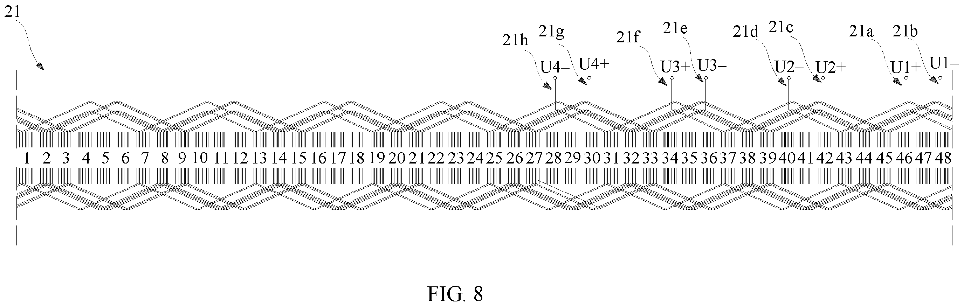

The following table 5 shows phase belt distribution of a U-phase winding structure in the flat wire winding structure. FIG. 8 is a schematic diagram of expanded distribution of a U-phase winding structure in an 8-pole 48-slot 10-layer flat wire winding structure according to an embodiment of this application.

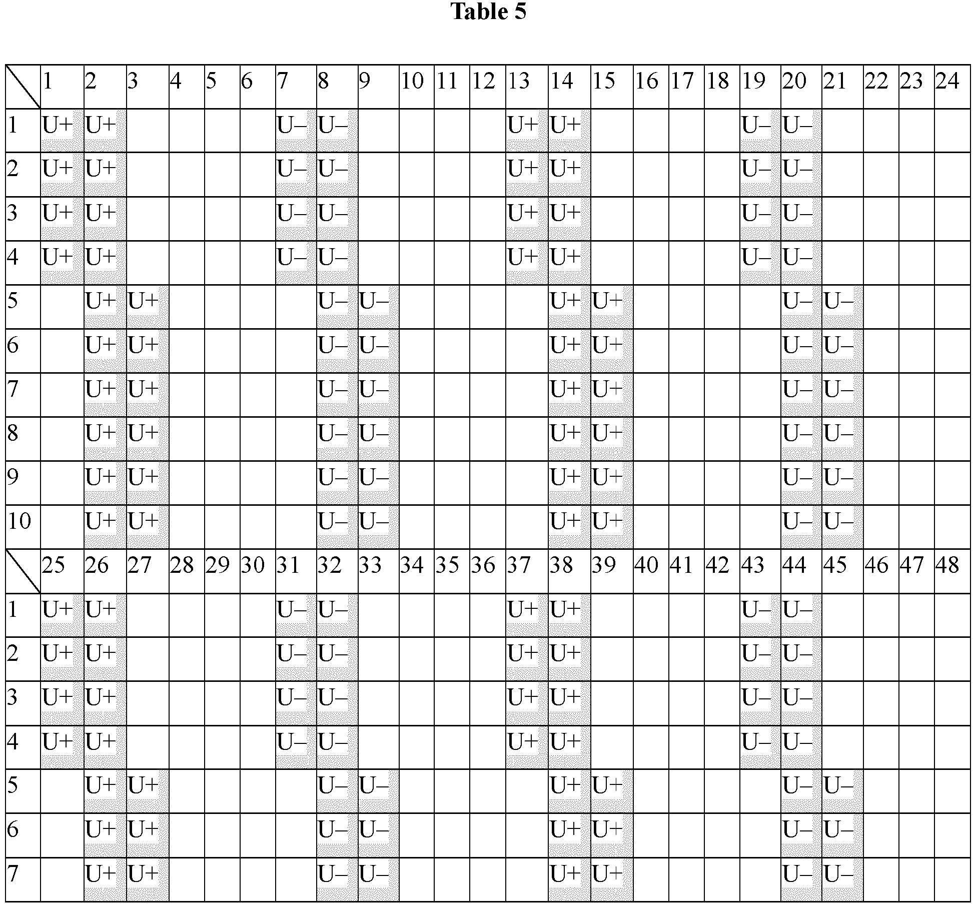

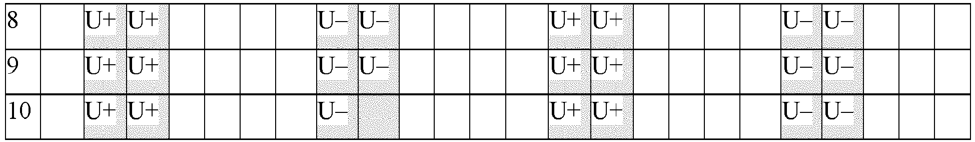

With reference to FIG. 8, the branch 1, the branch 2, the branch 3, and the branch 4 are connected in parallel to form the U-phase winding structure 21. The wire-in end 21a of the branch 1 is located in the first layer of No. 1 stator slot, and the wire-out end 21b is located in the tenth layer of No. 45 stator slot. The wire-in end 21c of the branch 2 is located in the tenth layer of No. 39 stator slot, and the wire-out end 21d is located in the first layer of No. 43 stator slot. The wire-in end 21e of the branch 3 is located in the first layer of No. 37 stator slot, and the wire-out end 21f is located in the tenth layer of No. 33 stator slot. The wire-in end 21g of the branch 4 is located in the tenth layer of No. 27 stator slot, and the wire-out end 21h is located in the first layer of No. 31 stator slot.

With reference to Table 5 and FIG. 8, a quantity of stator slots of the U-phase winding structure 21 in each pole is 2, and the U-phase winding structure 21 is divided into the first part 211 and the second part 212. However, the stator slot wound with the first part 211 and the stator slot wound with the second part 212 are staggered by one slot in each pole. For example, layers 5 to 10 of No. 2 stator slot are staggered with layers 1 to 4 of No. 1 stator slot by one slot. Therefore, the equivalent pitch y of the U-phase winding structure 21 is equal to 5, so that a short-pitch effect is achieved.

It should be noted that the U-phase winding structure 21 may alternatively be wound on the stator slots 11 in another manner (for example, a quantity of parallel branches, stator slots 11 from which the winding structure 21 is led in and led out, and a winding sequence on the stator slots 11 are different), provided that requirements for a quantity of poles, a quantity of branches, and a quantity of stator slots 11 in each pole of each phase that are required by the U-phase winding structure can be met.

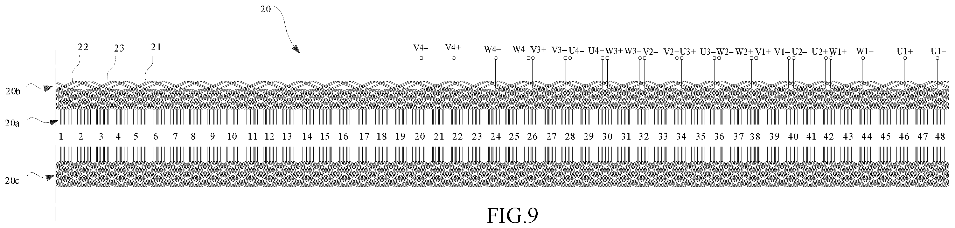

The following Table 6 shows phase belt distribution of the flat wire winding structure. FIG. 9 is a schematic diagram of expanded distribution of an 8-pole 48-slot 10-layer flat wire winding structure according to an embodiment of this application.

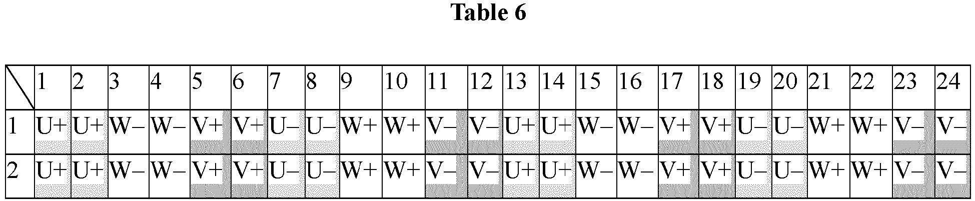

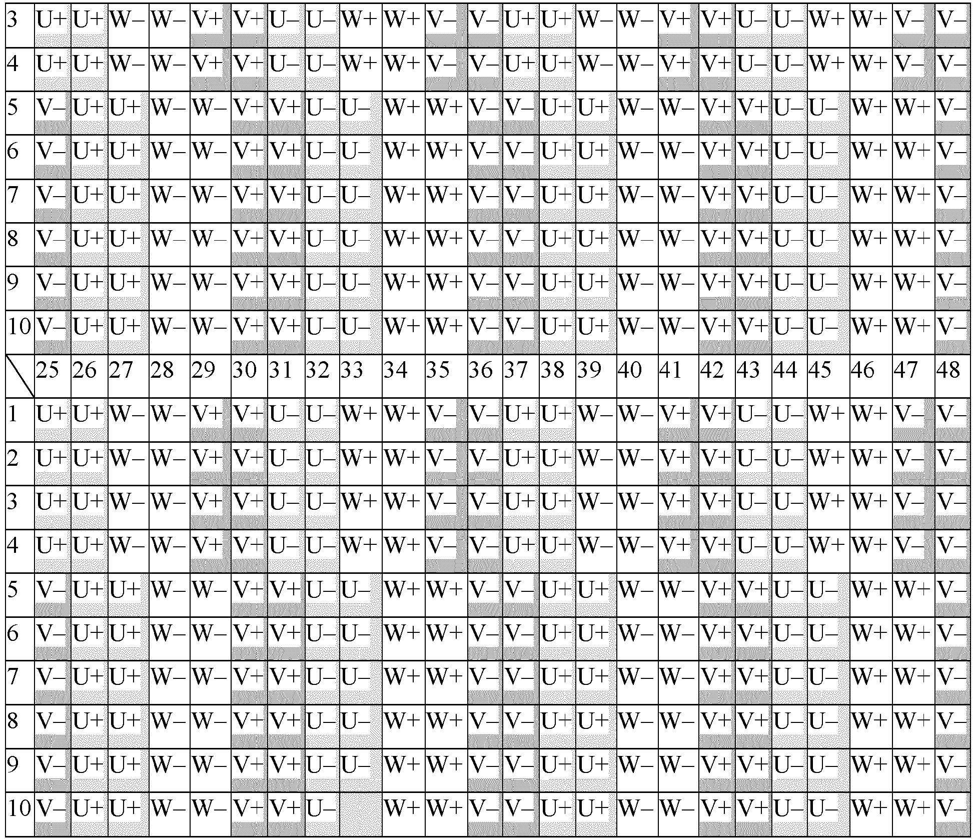

With reference to Table 6 and FIG. 9, in each pole of each phase of the flat wire winding structure 20, because the stator slot wound with the first part 211 and the stator slot wound with the second part 212 are staggered by one slot, equivalent pitches of the U-phase winding structure 21, the V-phase winding structure 23, and the W-phase winding structure 22 are all 5, to achieve a short-pitch effect, so that the flat wire winding structure 20 is a short-pitch winding structure, back electromotive force harmonics during running of the motor 100 are effectively reduced, and performance of the motor 100 is improved. In addition, the structural design of the winding structure is not changed, and the only difference is that the first part 211 and the second part 212 are wound in a staggered manner by one slot during wounding. The structural design is simple, a process requirement is low, and implementation is convenient.

It should be noted that, when the flat wire winding structure 20 includes a plurality of phases, as shown in Table 6, winding structures in a same stator slot 11 do not belong to a same phase, that is, a same stator slot 11 includes two winding structures of different phases. For example, layers 1 to 4 in No. 1 stator slot 11 are the U-phase winding structure 21, and layers 6 to 10 are the V-phase winding structures 23. An insulator may be directly disposed between two adjacent layers of the flat wire winding structure 20 that belong to different phase belts. The insulator may be specifically insulation paper, to reduce or avoid connection or interference between different phase belts. For example, an insulator may be disposed between the fourth layer and the sixth layer of No. 1 stator slot.

It should be noted that a slot insulator is disposed in each stator slot 11, to implement insulation to the ground. However, no insulator needs to be disposed between winding structures of a same phase in a same stator slot 11. In this embodiment of this application, the quantity n of layers in the stator slot 11 is divided into a and b. To be specific, in a same stator slot 11, at least a layers or b layers are in-phase winding coils, and no insulator needs to be used to implement interlayer insulation. This helps reduce use of insulation materials, helps reduce costs, and helps improve a copper slot fill factor of the flat wire winding structure 20.

Alternatively, a winding coil of the flat wire winding structure 20 includes a coil conductor and an insulation layer wrapped outside the coil conductor. Insulativity of the insulation layer may be enabled to be strong in a manner of increasing a thickness of the insulation layer or manufacturing the insulation layer by using a material with high insulativity, so that a requirement can be met. In this way, in a same stator slot 11, no insulator may be disposed between two adjacent flat wire winding structures 20 of different phases.

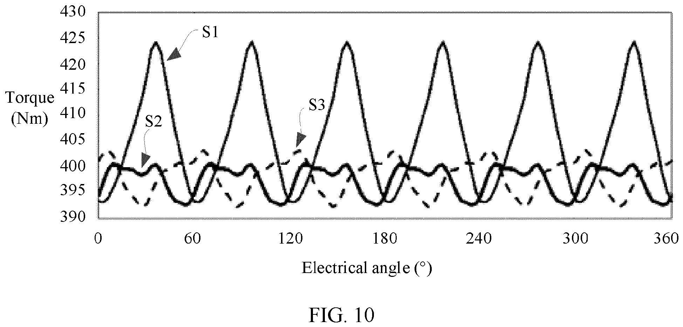

FIG. 10 is a comparison diagram of torque fluctuations at a peak torque working condition point of an 8-pole 48-slot motor according to an embodiment of this application.

With reference to FIG. 10, in FIG. 10, a curve S1 represents a torque fluctuation of a full-pitch winding motor, a curve S2 represents a torque fluctuation of a short-pitch winding motor in which layers in stator slots are equally divided, and a curve S3 represents a torque fluctuation of a short-pitch winding motor according to an embodiment of this application. As shown in FIG. 10, the torque fluctuation of the motor using a short-pitch winding greatly decreases compared with that of the motor using a full-pitch winding. A peak value of a torque fluctuation peak of the motor using the full-pitch winding is 31.14 Nm, and a peak value of a torque fluctuation peak of the short-pitch winding motor in which layers in stator slots are equally divided and a peak value of a torque fluctuation peak of the short-pitch winding motor provided in this embodiment of this application are 7.76 Nm and 10.95 Nm, respectively, and decrease by 75% and 65%, respectively. Therefore, the short-pitch winding motor provided in this embodiment of this application has a quite good torque fluctuation suppression effect.

In another possible implementation, an example in which the quantity p of poles of the motor 100 is 6, the quantity N of slots of each pole of each phase is 3, and the quantity of layers of the flat wire winding structure 20 in each stator slot 11 is 6 is used. In this case, the quantity Q of stator slots on the stator iron core 10 is 54. That is, the flat wire winding structure 20 is a 6-pole 54-slot 6-layer winding with 3 pole pairs and a pole pitch of 9.

For example, the 6-pole 54-slot 6-layer flat wire winding structure 20 includes 3 parallel branch windings, which are respectively a branch 1, a branch 2, and a branch 3. The following Table 7 shows phase belt distribution of a branch 2 of a U-phase winding structure in the flat wire winding structure.

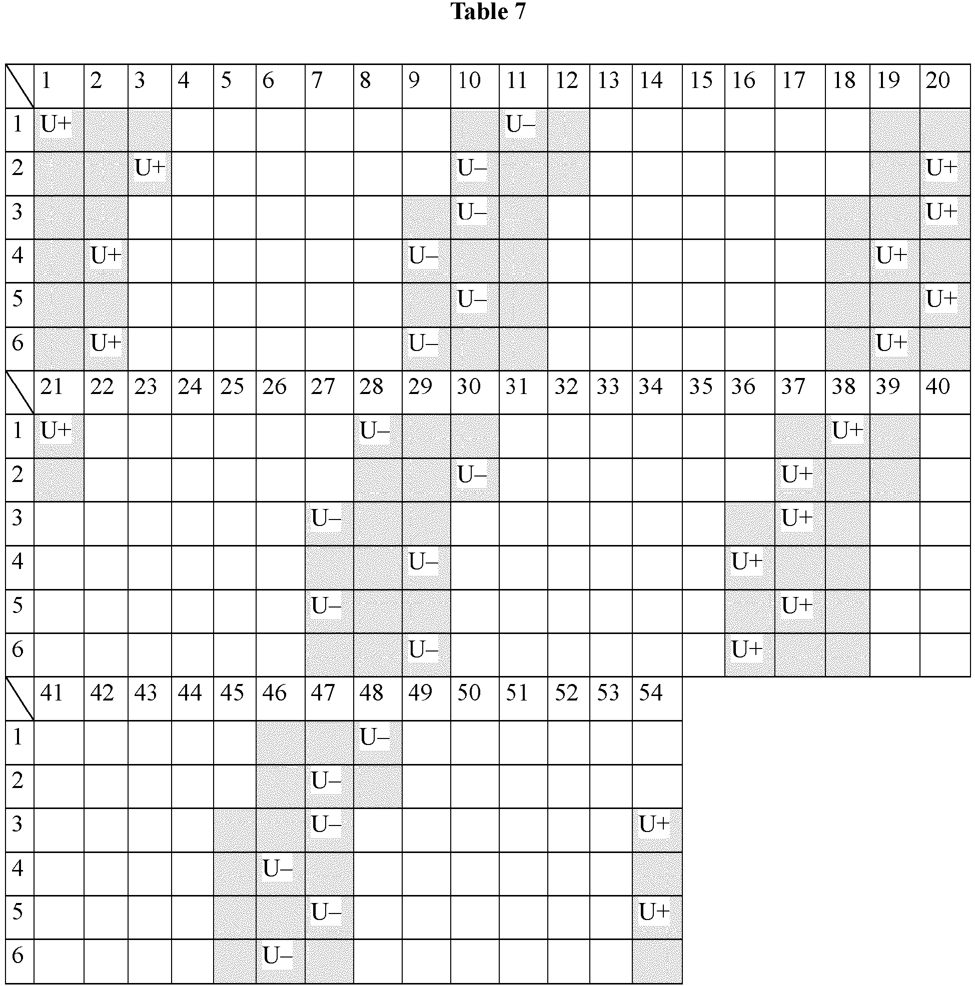

With reference to Table 7, an example in which in the U-phase winding structure 21, the first part 211 has two layers in the stator slot, and the second part 212 has four layers in the stator slot is used. In each pole of the U-phase winding structure 21, the quantity of slots by which the stator slot wound with the first part 211 and the stator slot wound with the second part 212 are staggered is y1=1. For example, the first part is located at layers 1 and 2 in No. 1 stator slot, and the second part is located at layers 3 to 6 in No. 54 stator slot.

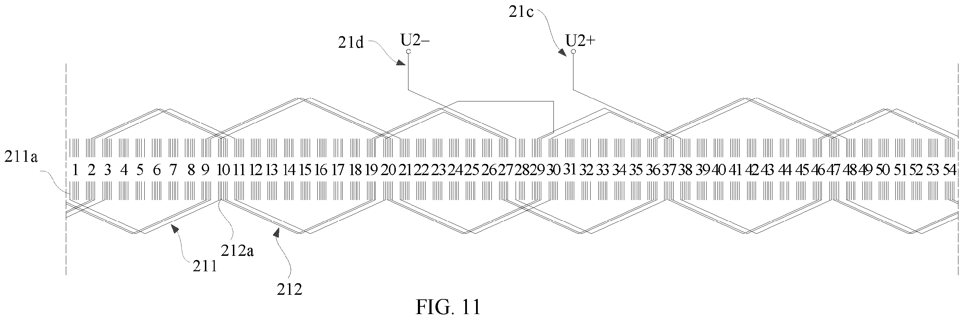

FIG. 11 is a schematic diagram of expanded distribution of a branch 2 of a U-phase winding structure in a 6-pole 54-slot 6-layer flat wire winding structure according to an embodiment of this application.

With reference to FIG. 11, the wire-in end 21c of the branch 2 of the U-phase winding structure 21 is located in the first layer of No. 19 stator slot, and the wire-out end 21d is located in the first layer of No. 29 stator slot.

With reference to Table 7 and FIG. 11, the first part 211 and the second part 212 of the U-phase winding structure 21 may be wound in a staggered order. In other words, the U-phase winding structure may be first wound on a part of the first stator slot 11 and then the U-phase winding structure may be wound on a part of the second stator slot 11, winding is performed in a staggered manner, and finally, the first part 211 and the second part 212 are separately wound on the stator slots 11.

Specifically, wiring of the branch 2 of the U-phase winding structure 21 is sequentially: the first layer of No. 19 stator slot, the second layer of No. 28 stator slot, the first layer of No. 39 stator slot, the second layer of No. 48 stator slot, the first layer of No. 2 stator slot, the second layer of No. 11 stator slot, the third layer of No. 18 stator slot, the fourth layer of No. 27 stator slot, the third layer of No. 38 stator slot, the fourth layer of No. 47 stator slot, the third layer of No. 1 stator slot, the fourth layer of No. 10 stator slot, the fifth layer of No. 18 stator slot, the sixth layer of No. 27 stator slot, the fifth layer of No. 38 stator slot, the sixth layer of No. 47 stator slot, the fifth layer of No. 1 stator slot, the sixth layer of No. 10 stator slot, the sixth layer of No. 20 stator slot, the fifth layer of No. 11 stator slot, the fourth layer of No. 54 stator slot, the third layer of No. 45 stator slot, the fourth layer of No. 37 stator slot, the third layer of No. 28 stator slot, the second layer of No. 21 stator slot, the first layer of No. 12 stator slot, the second layer of No. 1 stator slot, the first layer of No. 46 stator slot, the second layer of No. 38 stator slot, and the first layer of No. 29 stator slot.

With reference to Table 7 and FIG. 11, the pole pitch y0 is a span between No. 1 stator slot and No. 10 stator slot, that is, y0=9. Because the stator slot wound with the first part 211 and the second stator slot wound with the second part 212 are staggered by one slot, for example, the first part 211 is located in No. 1 stator slot, the second part 212 is located in No. 54 stator slot. To be specific, the second part 212 of the phase of the winding structure is staggered by one slot towards an adjacent pole, so that the equivalent pitch between phase belts of the U-phase winding structure 21 in the two adjacent poles is y=y0-1=8, and a short-pitch effect is achieved.

In the U-phase winding structure 21, first conductor layers 211a in adjacent layers are connected to form a first coil layer, and second conductor layers 212a in adjacent layers are connected to form a second coil layer.

The first coil layers are connected to each other through a single hairpin wire, and the second coil layers are connected to each other through a single hairpin wire. In addition, the first conductor layer 211a and the second conductor layer 212a may also be connected to each other through a single hairpin wire.

On the side of the welding end, the span of the first coil layer, the span of the second coil layer, and the span of the single hairpin wire between the first coil layer and the second coil layer may also be equal.

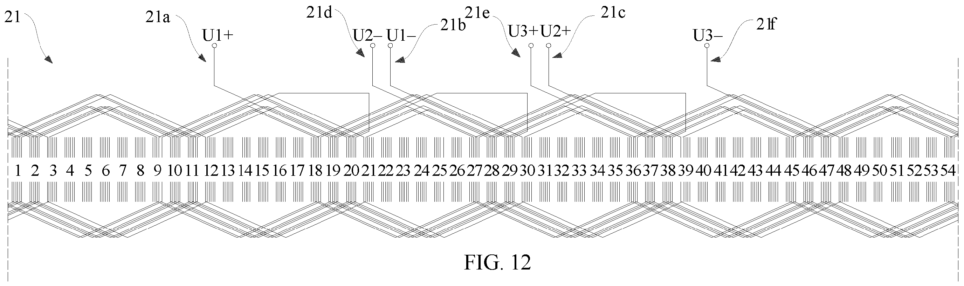

The following table 8 shows phase belt distribution of a U-phase winding structure in the flat wire winding structure. FIG. 12 is a schematic diagram of expanded distribution of a U-phase winding structure in a 6-pole 54-slot 6-layer flat wire winding structure according to an embodiment of this application.

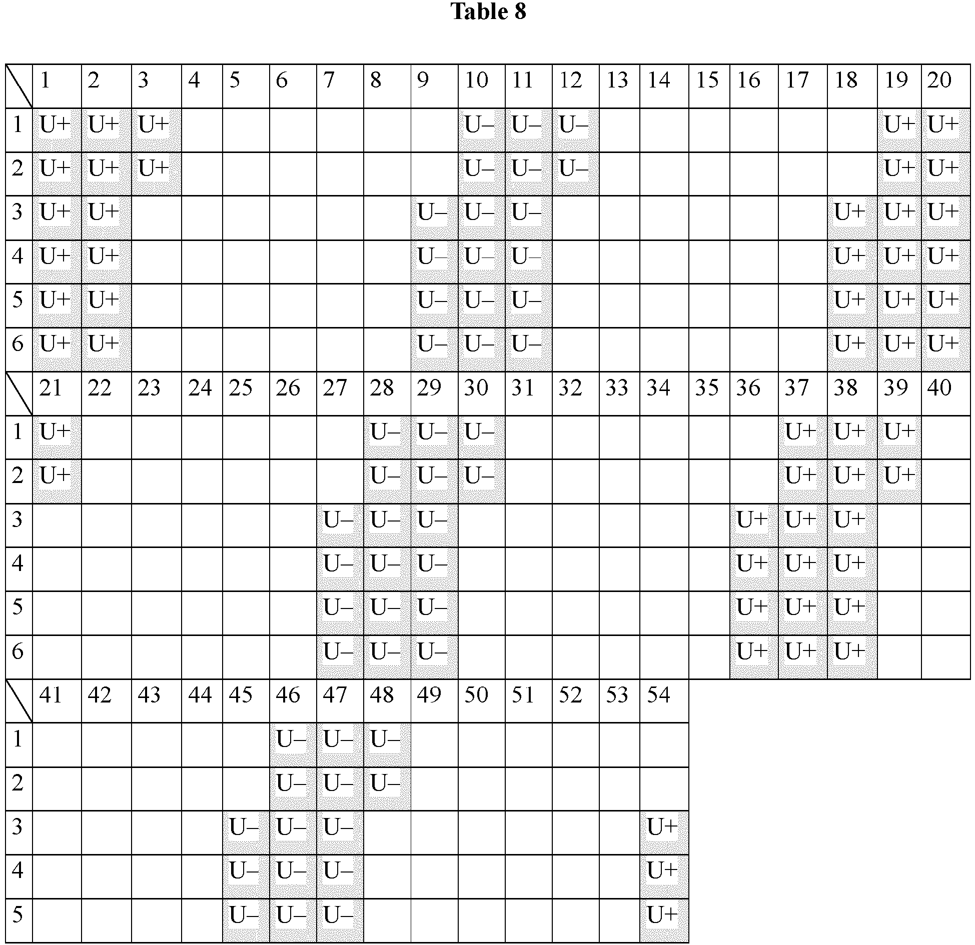

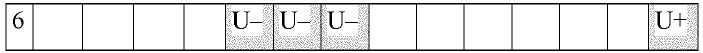

With reference to Table 8 and FIG. 12, a quantity of stator slots of the U-phase winding structure 21 in each pole is 3, and the U-phase winding structure 21 is divided into the first part 211 and the second part 212. However, the stator slot wound with the first part 211 and the stator slot wound with the second part 212 are staggered by one slot in each pole. For example, layers 1 and 2 of No. 1 stator slot are staggered with layers 3 to 6 of No. 54 stator slot by one slot. Therefore, the equivalent pitch y of the U-phase winding structure 21 is equal to 8, so that a short-pitch effect is achieved.

It should be noted that the U-phase winding structure 21 may alternatively be wound on the stator slots 11 in another manner (for example, a quantity of parallel branches, stator slots 11 from which the winding structure 21 is led in and led out, and a winding sequence on the stator slots 11 are different), provided that requirements for a quantity of poles, a quantity of branches, and a quantity of stator slots 11 in each pole of each phase that are required by the U-phase winding structure can be met.

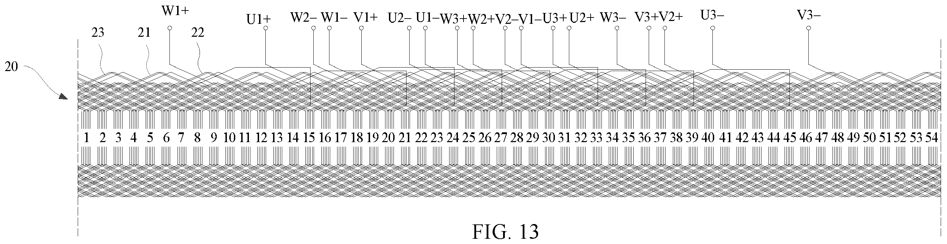

The following Table 9 shows phase belt distribution of the flat wire winding structure. FIG. 13 is a schematic diagram of expanded distribution of a 6-pole 54-slot 6-layer flat wire winding structure according to an embodiment of this application.

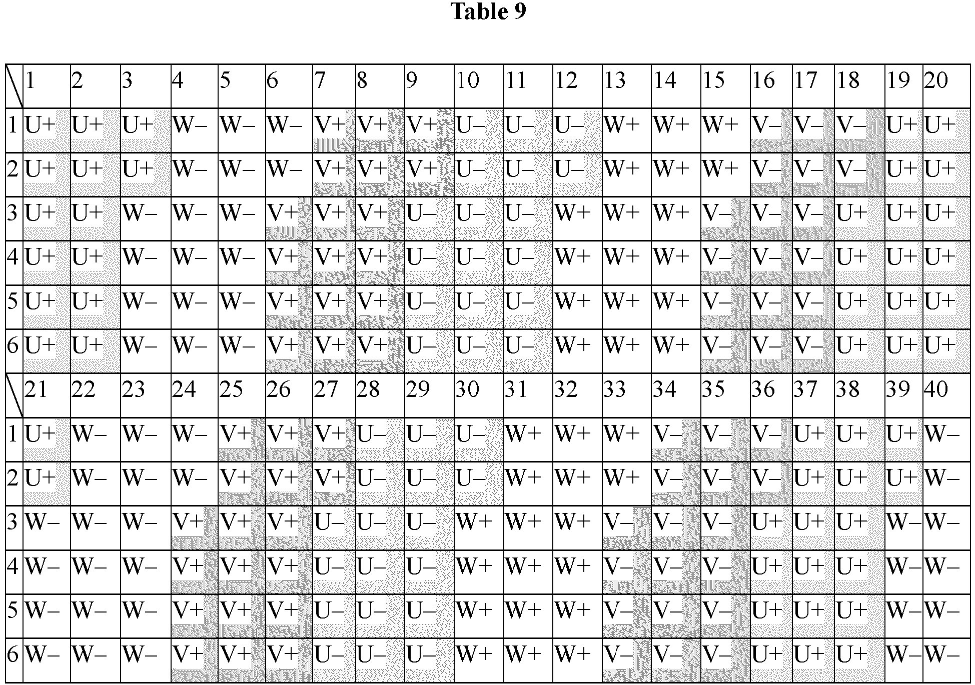

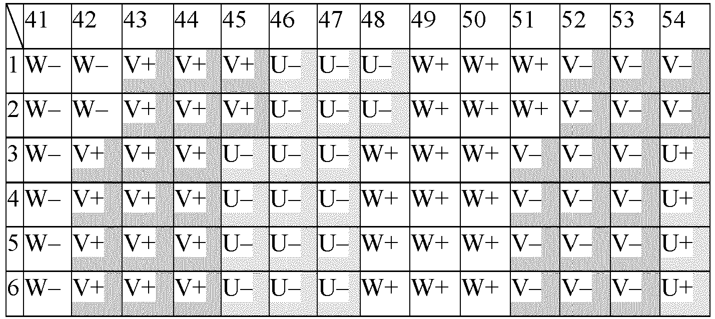

With reference to Table 9 and FIG. 13, in each pole of each phase of the flat wire winding structure 20, because the stator slot wound with the first part 211 and the stator slot wound with the second part 212 are staggered by one slot, equivalent pitches of the U-phase winding structure 21, the V-phase winding structure 23, and the W-phase winding structure 22 are all 5, to achieve a short-pitch effect, so that the flat wire winding structure 20 is a short-pitch winding structure, back electromotive force harmonics during running of the motor 100 are effectively reduced, and performance of the motor 100 is improved. In addition, the structural design of the winding structure is not changed, and the only difference is that the first part 211 and the second part 212 are wound in a staggered manner by one slot during wounding. The structural design is simple, a process requirement is low, and implementation is convenient.

The quantity n of layers of the flat wire winding structure 20 in the stator slot 11 may alternatively be an odd number.

In a conventional technology, to implement a short pitch of the winding structure, the quantity of layers in the stator slot is equally divided and stator slots are staggered with each other, so that each phase of the winding structure is divided into two parts, and the two parts are respectively located in the stator slots that are staggered with each other after equal division. However, when the quantity n of layers in the stator slot is an odd number, a problem that equal division cannot be performed exists. It is difficult to implement a short-pitch design of the winding structure in the foregoing manner.

However, in this embodiment of this application, because the quantity of layers of the first part 211 of each phase of the flat wire winding structure 20 in the stator slot 11 is a, and the quantity of layers of the second part 212 in the stator slot 11 is b, a+b=n, that is, the n layers are divided into two parts: a and b, and a≠b. In this way, when the quantity n of layers of the stator slot 11 is an odd number, a short-pitch effect can also be achieved in the foregoing staggered manner, the structural design is simple, a process requirement is low, and implementation is convenient.

To be specific, in this embodiment of this application, the quantity n of layers of the flat wire winding structure 20 in the stator slot 11 may be an odd number, and an effect of the short-pitch winding can also be achieved, so that an application scope of the winding structure is expanded.

When n is an odd number, the quantity a of layers of the first part 211 in the stator slot 11 may be (n+1)/2, and the quantity b of layers of the second part 212 in the stator slot 11 may be b=(n-1)/2. Alternatively, the quantity a of layers of the first part 211 in the stator slot 11 may be (n-1)/2, and the quantity b of layers of the second part 212 in the stator slot 11 may be b=(n+1)/2. In this way, the quantity of layers of the first part 211 in the stator slot 11 is close to the quantity of layers of the second part 212 in the stator slot 11, and the flat wire winding structure 20 can be easily wound when an effect of the short-pitch winding is implemented, thereby facilitating implementation.

For example, n may be 7, the quantity a of layers of the first part 211 of the flat wire winding structure 20 in the stator slot 11 may be 3, and the quantity b of layers of the second part 212 in the stator slot 11 may be 4, or the quantity a of layers of the first part 211 in the stator slot 11 may be 4, and the quantity b of layers of the second part 212 in the stator slot 11 may be 3.

For example, n may be 9, the quantity a of layers of the first part 211 of the flat wire winding structure 20 in the stator slot 11 may be 4, and the quantity b of layers of the second part 212 in the stator slot 11 may be 5, or the quantity a of layers of the first part 211 in the stator slot 11 may be 5, and the quantity b of layers of the second part 212 in the stator slot 11 may be 4. To be specific, when the quantity of layers of the flat wire winding structure 20 wound in the stator slot 11 is large, for example, 7 and 9, a short-pitch effect can also be achieved. This helps improve performance of the motor 100.

In a possible implementation, an example in which the quantity p of poles of the motor 100 is 8, the quantity N of slots of each pole of each phase is 2, and the quantity n of layers of the flat wire winding structure 20 in each stator slot 11 is 9 is used. In this case, the quantity Q of stator slots on the stator iron core 10 is 48. That is, the flat wire winding structure 20 is an 8-pole 48-slot 9-layer winding with 4 pole pairs and a pole pitch of 6.

For example, the 8-pole 48-slot 9-layer flat wire winding structure 20 includes 4 branch windings, which are respectively a branch 1, a branch 2, a branch 3, and a branch 4. The following Table 10 shows phase belt distribution of the branch 1 of the U-phase winding structure in the flat wire winding structure.

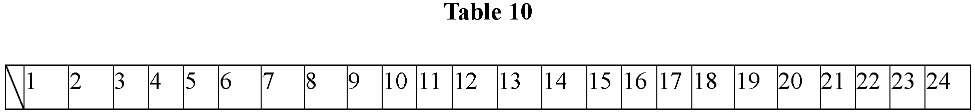

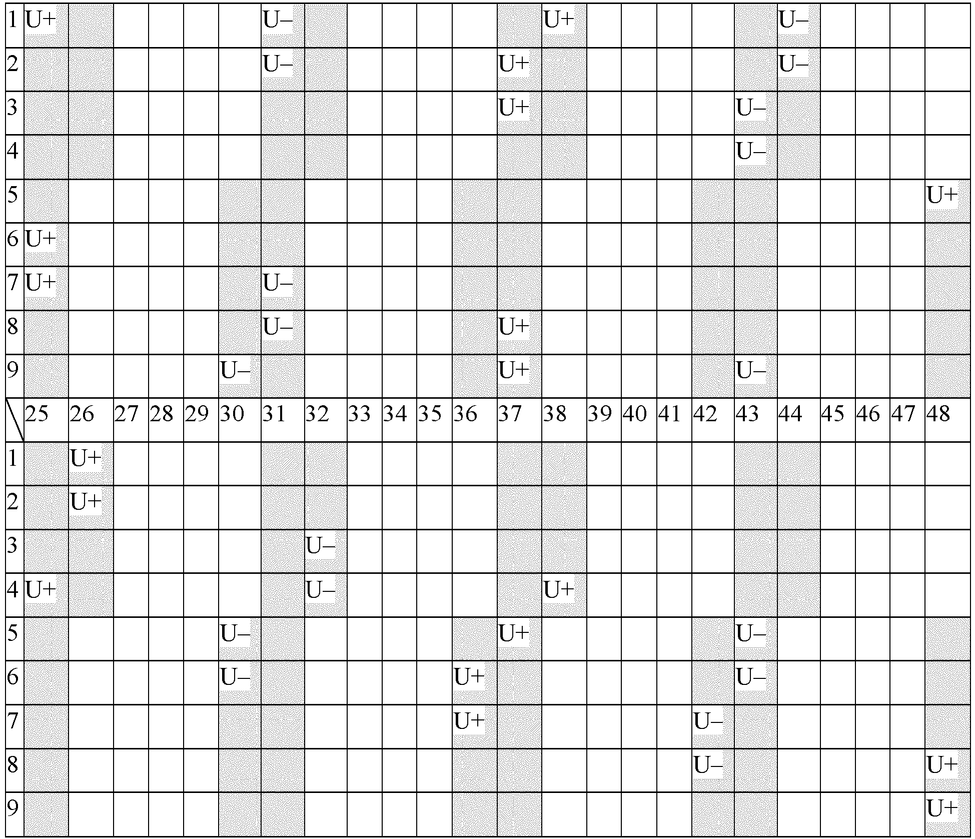

With reference to Table 10, it can be learned that nine layers may be wound in each stator slot, and the first layer may be a slot bottom layer of the stator slot, and the ninth may be a slot opening layer of the stator slot.

For example, in the U-phase winding structure 21, the first part 211 has four layers in the stator slot, and the second part 212 has five layers in the stator slot. The quantity of slots by which the stator slot wound with the first part 211 and the stator slot wound with the second part 212 are staggered is y1=1. For example, the first part 211 is located at layers 1 to 4 in No. 1 stator slot 11, and the second part 212 is located at layers 5 to 9 in No. 48 stator slot 11.

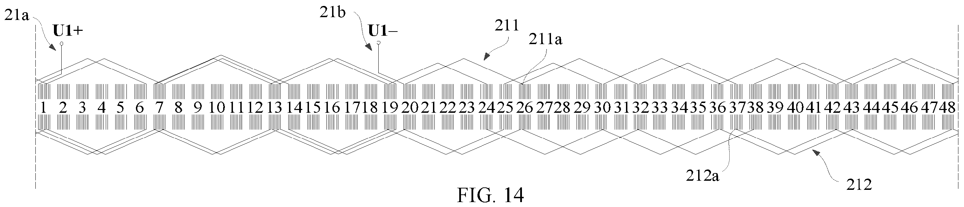

FIG. 14 is a schematic diagram of expanded distribution of a branch 1 of a U-phase winding structure in an 8-pole 48-slot 9-layer flat wire winding structure according to an embodiment of this application.

With reference to Table 10 and FIG. 14, the wire-in end 21a of the branch 1 is located in the first layer of No. 1 stator slot, and the wire-out end 21b is located in the first layer of No. 20 stator slot.

Specifically, wiring of the branch 1 of the U-phase winding structure 21 is sequentially: the first layer of No. 1 stator slot, the second layer of No. 7 stator slot, the third layer of No. 13 stator slot, the fourth layer of No. 19 stator slot, the fifth layer of No. 24 stator slot, the sixth layer of No. 30 stator slot, the seventh layer of No. 36 stator slot, the eighth layer of No. 42 stator slot, the ninth layer of No. 48 stator slot, the ninth layer of No. 6 stator slot, the eighth layer of No. 48 stator slot, the seventh layer of No. 42 stator slot, the sixth layer of No. 36 stator slot, the fifth layer of No. 30 stator slot, the fourth layer of No. 25 stator slot, the third layer of No. 19 stator slot, the second layer of No. 13 stator slot, the first layer of No. 7 stator slot, the first layer of No. 14 stator slot, the second layer of No. 20 stator slot, the third layer of No. 26 stator slot, the fourth layer of No. 32 stator slot, the fifth layer of No. 37 stator slot, the sixth layer of No. 43 stator slot, the seventh layer of No. 1 stator slot, the eighth layer of No. 7 stator slot, the ninth layer of No. 13 stator slot, the ninth layer of No. 19 stator slot, the eighth layer of No. 13 stator slot, the seventh layer of No. 7 stator slot, the sixth layer of No. 1 stator slot, the fifth layer of No. 43 stator slot, the fourth layer of No. 38 stator slot, the third layer of No. 32 stator slot, the second layer of No. 26 stator slot, and the first layer of No. 20 stator slot.

With reference to Table 10 and FIG. 14, the pole pitch y0 is a span between No. 1 stator slot and No. 7 stator slot, that is, y0=6. Because the stator slot wound with the first part 211 and the second stator slot wound with the second part 212 are staggered by one slot, for example, the first part 211 is located in No. 1 stator slot, the second part 212 is located in No. 48 stator slot. To be specific, the second part 212 of the phase of the winding structure is staggered by one slot towards an adjacent pole, so that the equivalent pitch between phase belts of the U-phase winding structure 21 in the two adjacent poles is y=y0-1=5, and a short-pitch effect is achieved.

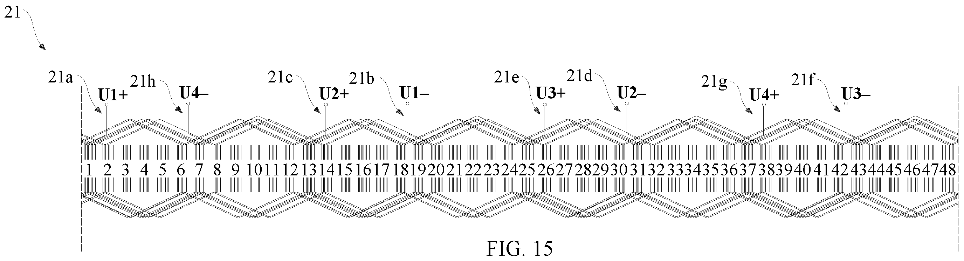

The following table 11 shows phase belt distribution of a U-phase winding structure in the flat wire winding structure. FIG. 15 is a schematic diagram of expanded distribution of a U-phase winding structure in an 8-pole 48-slot 9-layer flat wire winding structure according to an embodiment of this application.

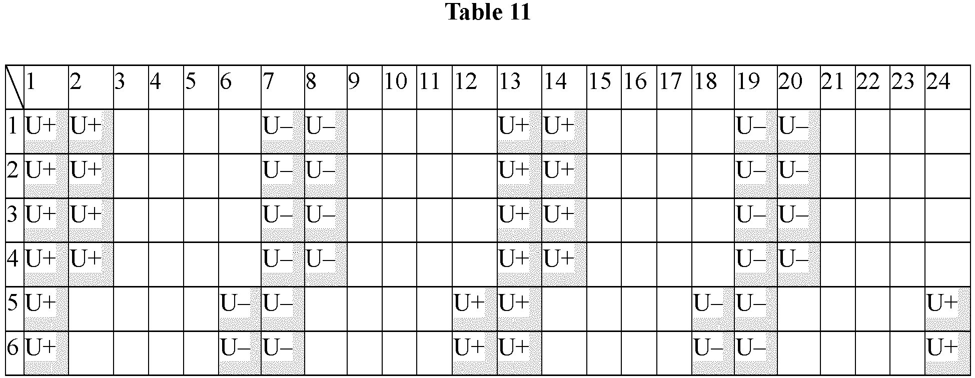

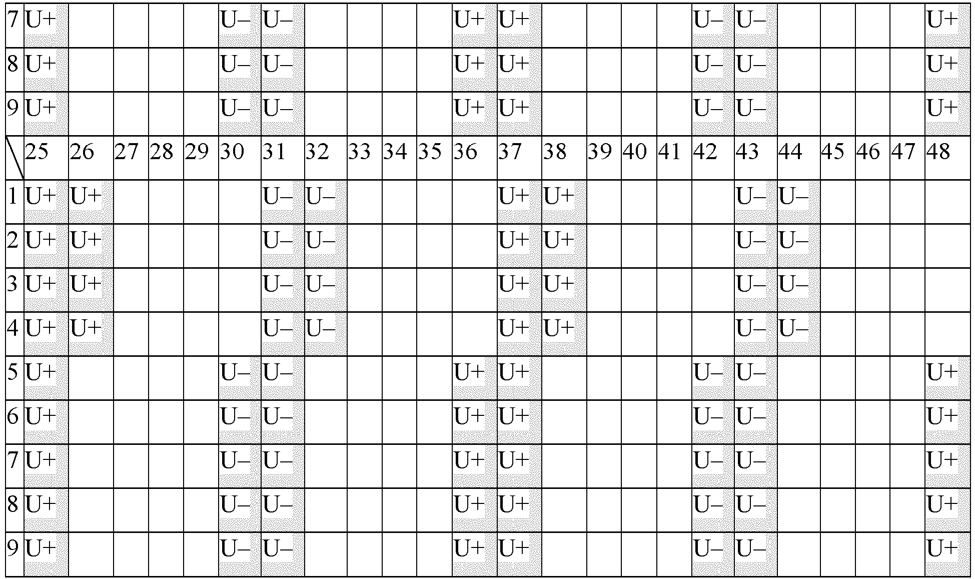

With reference to Table 11 and FIG. 15, a quantity of stator slots of the U-phase winding structure 21 in each pole is 2, and the U-phase winding structure 21 is divided into the first part 211 and the second part 212. However, the stator slot wound with the first part 211 and the stator slot wound with the second part 212 are staggered by one slot in each pole. For example, layers 1 to 4 of No. 1 stator slot are staggered with layers 5 to 9 of No. 48 stator slot by one slot. Therefore, the equivalent pitch y of the U-phase winding structure 21 is equal to 5, so that a short-pitch effect is achieved.

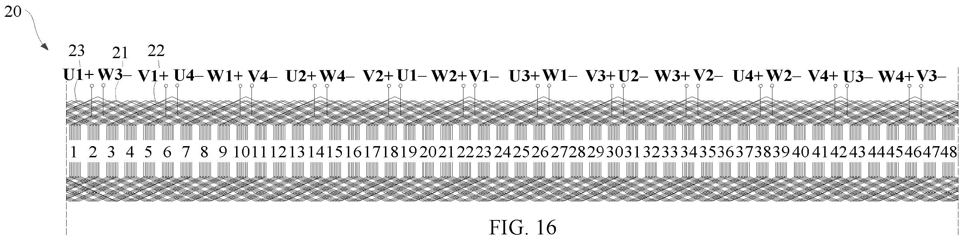

The following Table 12 shows phase belt distribution of the flat wire winding structure. FIG. 16 is a schematic diagram of expanded distribution of an 8-pole 48-slot 9-layer flat wire winding structure according to an embodiment of this application.

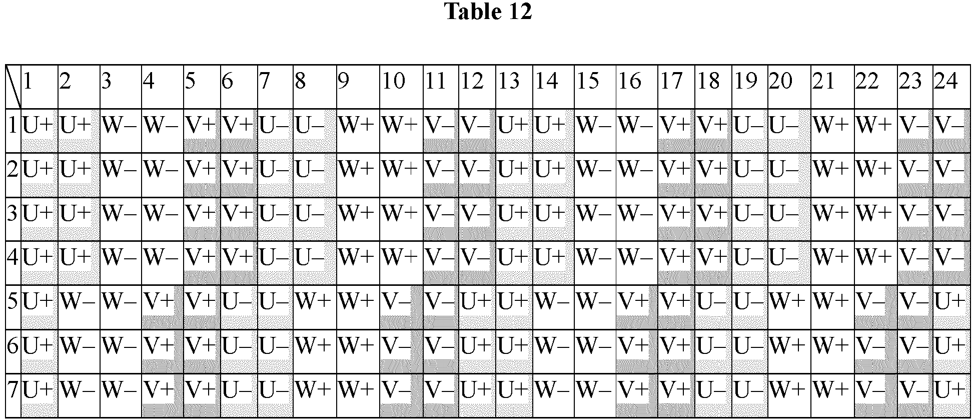

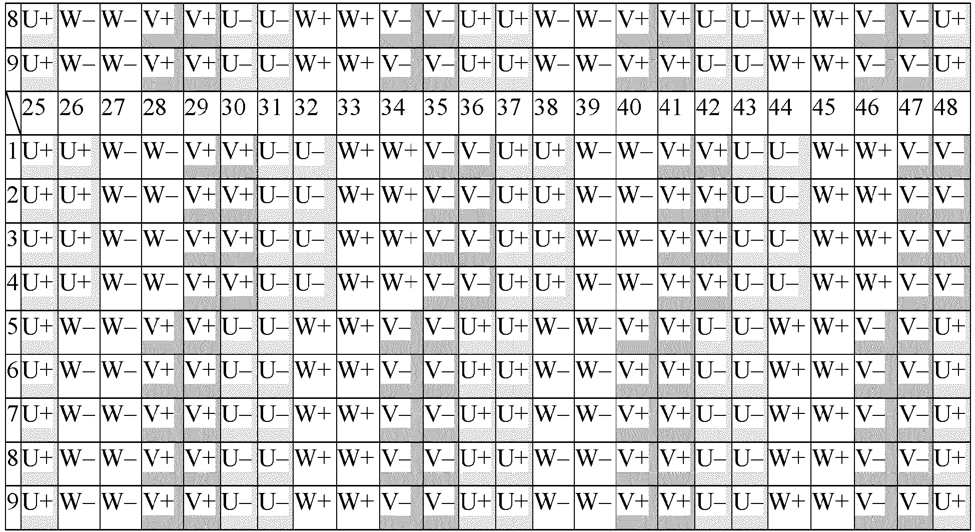

With reference to Table 12 and FIG. 16, in each pole of each phase of the flat wire winding structure 20, because the stator slot wound with the first part 211 and the stator slot wound with the second part 212 are staggered by one slot, equivalent pitches of the U-phase winding structure 21, the V-phase winding structure 23, and the W-phase winding structure 22 are all 5, to achieve a short-pitch effect, so that the flat wire winding structure 20 is a short-pitch winding structure, back electromotive force harmonics during running of the motor 100 are effectively reduced, and performance of the motor 100 is improved. The structural design is simple, a process requirement is low, and implementation is convenient.

An embodiment of this application further provides a vehicle. Specifically, the vehicle may be an electric vehicle/electric automobile (EV), a pure electric vehicle (PEV/BEV), a hybrid electric vehicle (HEV), a range extended electric vehicle (REEV), a plug-in hybrid electric vehicle (PHEV), a new energy vehicle (New Energy Vehicle), or the like.

Specifically, the vehicle may include wheels, a transmission component, and a motor. The motor is connected to the wheels by using the transmission component, so that the motor drives the wheels to rotate, thereby driving the vehicle to move.

It should be understood that the vehicle may further include a mechanical part such as a vehicle body or a braking component, or may further include another mechanical part that can implement a vehicle function.

In descriptions of embodiments of this application, it should be noted that, unless otherwise clearly specified and limited, the terms "installation", "connection to", and "connection" should be understood in a broad sense. For example, the connection may be a fixed connection, may be an indirect connection through an intermediate medium, or may be an internal connection between two elements or an interaction relationship between two elements. For persons of ordinary skill in the art, specific meanings of the foregoing terms in embodiments of this application may be understood based on a specific situation. The terms "first", "second", "third", "fourth", and the like (if present) are intended to distinguish similar objects but do not need to be used to describe a specific order or sequence.

Finally, it should be noted that, the foregoing embodiments are merely intended for describing the technical solutions of embodiments of this application other than limiting the technical solutions. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A motor, comprising a stator iron core and a flat wire winding structure, wherein a plurality of stator slots are provided in a circumference of the stator iron core;
the flat wire winding structure is wound on the stator iron core through the stator slots, a part of the flat wire winding structure is located in the stator slots, a part of the flat wire winding structure is located outside the stator slots, and each of the stator slots has n layers of the flat wire winding structure;
each phase of the flat wire winding structure comprises a first part and a second part, wherein a quantity of layers of the first part in the stator slot is a, a quantity of layers of the second part in the stator slot is b, a+b=n, a≠b, and n is greater than 2; and
in each pole of each phase of the flat wire winding structure, a stator slot wound with the first part and a stator slot wound with the second part are staggered by y1 slots, so that a pitch of the flat wire winding is y=y0-y1, wherein y0 is a pole pitch of the flat wire winding.

2. The motor according to claim 1, wherein n is an even number, or n is an odd number.

3. The motor according to claim 2, wherein when n is an even number, a is an even number, and b is an even number.

4. The motor according to claim 3, wherein n/2 is an odd number.

5. The motor according to claim 4, wherein the quantity of layers of the first part in the stator slot is a=n/2+1, and the quantity of layers of the second part in the stator slot is b=n/2-1; or
the quantity of layers of the first part in the stator slot is a=n/2-1, and the quantity of layers of the second part in the stator slot is b=n/2+1.

6. The motor according to claim 5, wherein n comprises at least: 6 and 10.

7. The motor according to claim 3, wherein n/2 is an even number.

8. The motor according to claim 7, wherein the quantity of layers of the first part in the stator slot is a=n/2-2, and the quantity of layers of the second part in the stator slot is b=n/2+2; or
the quantity of layers of the first part in the stator slot is a=n/2+2, and the quantity of layers of the second part in the stator slot is b=n/2-2.

9. The motor according to any one of claims 3 to 8, wherein the first part comprises a first conductor layer located in the stator slot, and first conductor layers in every two adjacent layers are connected to form a first coil layer; and
the second part comprises a second conductor layer located in the stator slot, and second conductor layers in every two adjacent layers are connected to form a second coil layer.

10. The motor according to claim 9, wherein each phase of the flat wire winding structure comprises at least two first coil layers, and the first coil layers are connected to each other through a single hairpin wire.

11. The motor according to claim 9 or 10, wherein each phase of the flat wire winding structure comprises at least two second coil layers, and the second coil layers are connected to each other through a single hairpin wire.

12. The motor according to any one of claims 9 to 11, wherein the first conductor layer is connected to the second conductor layer through a single hairpin wire.

13. The motor according to any one of claims 9 to 12, wherein each phase of the flat wire winding structure comprises a welding end, and on a side of the welding end, a span of the first coil layer, a span of the second coil layer, and a span of the hairpin wire between the first coil layer and the second coil layer are equal.

14. The motor according to claim 2, wherein when n is an odd number, the quantity of layers of the first part in the stator slot is a=(n+1)/2, and the quantity of layers of the second part in the stator slot is b=(n-1)/2; or
the quantity of layers of the first part in the stator slot is a=(n-1)/2, and the quantity of layers of the second part in the stator slot is b=(n+1)/2.

15. The motor according to claim 14, wherein n comprises at least: 7 and 9.

16. The motor according to any one of claims 1 to 15, wherein a range of a quantity y1 of slots of staggering is: 0<y1<y0.

17. The motor according to any one of claims 1 to 16, wherein a quantity of the stator slots of the flat wire winding is Q=mpq, wherein p is a quantity of poles of the flat wire winding structure, m is a quantity of phases of the flat wire winding structure, and q is a quantity of slots of each pole of each phase.

18. The motor according to any one of claims 1 to 17, wherein the flat wire winding structure comprises a plurality of phases, and in a same stator slot, an insulator is disposed between two adjacent layers of the flat wire winding structure that belongs to different phases.

19. A vehicle, comprising at least wheels, a transmission component, and the motor according to any one of claims 1 to 18, wherein the motor is connected to the wheels by using the transmission component.
